(19) Europäisches Patentamt
European Patent Office
Office européen des brevets

(11) **EP 2 817 219 B1**

(12) ## EUROPÄISCHE PATENTSCHRIFT

(45) Veröffentlichungstag und Bekanntmachung des Hinweises auf die Patenterteilung:
**03.06.2020   Patentblatt 2020/23**

(51) Int Cl.:
**B64C 27/08** *(2006.01)*    **B64C 27/20** *(2006.01)*
**B64C 29/00** *(2006.01)*    **G05D 1/08** *(2006.01)*

(21) Anmeldenummer: **13706475.4**

(22) Anmeldetag: **20.02.2013**

(86) Internationale Anmeldenummer:
**PCT/EP2013/053352**

(87) Internationale Veröffentlichungsnummer:
**WO 2013/124300 (29.08.2013 Gazette 2013/35)**

(54) **FLUGGERÄT**

AIRCRAFT

AÉRONEF

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **22.02.2012   DE 102012202698**
**22.02.2012   DE 202012001750 U**

(43) Veröffentlichungstag der Anmeldung:
**31.12.2014   Patentblatt 2015/01**

(73) Patentinhaber: **Volocopter GmbH**
**76646 Bruchsal (DE)**

(72) Erfinder:
• **SENKEL, Thomas**
**14199 Berlin (DE)**

• **WOLF, Stephan**
**76137 Karlsruhe (DE)**
• **ZOSEL, Alexander**
**76287 Rheinstetten (DE)**

(74) Vertreter: **Lemcke, Brommer & Partner**
**Patentanwälte Partnerschaft mbB**
**Siegfried-Kühn-Straße 4**
**76135 Karlsruhe (DE)**

(56) Entgegenhaltungen:
WO-A2-2008/147484    DE-A1-102005 010 336
DE-A1-102006 021 182    GB-A- 2 486 787
KR-B1- 101 042 200    US-A1- 2006 266 881

**Beschreibung**

Die vorliegende Erfindung betrifft ein senkrecht startendes und landendes Fluggerät zum Transport von Personen oder Lasten (Nutzlasten) mit mehreren, vorzugsweise gleichartigen und redundanten, im Wesentlichen in einer Fläche oder Ebene angeordneten Elektromotoren und Propellern, wobei jedem Propeller ein Elektromotor zum Antreiben des Propellers zugeordnet ist, nach dem Oberbegriff des Anspruchs 1.

Derartige Fluggeräte werden nach der englischen Bezeichnung "vertical take-off and landing" auch als VTOL bezeichnet. Bei der vorliegenden Beschreibung wird alternativ auch die Bezeichnung "Multikopter" verwendet. Die Erfindung ist in diesem Zusammenhang nicht auf Fluggeräte beschränkt, die von einem mitfliegenden Piloten gesteuert werden, sondern umfasst auch Fluggeräte, die für den ferngesteuerten oder autonomen Transport von entsprechenden Nutzlasten einsetzbar sind.

Senkrecht startende Fluggeräte mit mehreren Propellern oder Rotoren sind bekannt. Als Antrieb kamen dabei regelmäßig Verbrennungsmotoren zum Einsatz, die sich aber nur langsam und relativ unpräzise regeln lassen. Eine schnelle Lageregelung für das Fluggerät ist auf diese Weise praktisch nicht erreichbar. Aus diesem Grund ist beispielsweise bei vorbekannten Fluggeräten in Form von Hubschraubern eine Blattverstellung der Rotoren zur schnelleren Lageregelung vorgesehen. Dies führt jedoch zu einem stark erhöhten Konstruktions- und Kostenaufwand und im Betrieb zu einem erheblichen Verschleiß.

Auf dem Gebiet des Modellbaus sind Fluggeräte mit vier oder sechs Propellern und Elektroantrieb bekannt, bei welchem die Lageregelung im Flug durch schnelle Drehzahländerungen der verwendeten Elektroantriebe erreicht wird. Eine bloße größenmäßige Skalierung dieses Konzepts für den Bau von manntragenden Fluggeräten würde jedoch zu einem erheblichen Sicherheitsrisiko führen, da bei Ausfall nur eines Elektromotors das Fluggerät nicht mehr kontrollierbar wäre. Außerdem wäre bei hochskalierten Propellern die erforderliche Zeitdauer für eine Änderung des Schubs so groß, dass eine schnelle Lageregelung wiederum nicht erreichbar wäre.

Aus der GB 2 468 787 A ist ein Fluggerät bekannt, welches grundsätzlich nach Art eines herkömmlichen Tragflächenflugzeugs ausgebildet ist. Um senkrecht starten und landen zu können, besitzt es eine Mehrzahl elektrischer Triebwerke, die als Mantelstromtriebwerke ausgebildet sind und verschwenkt werden können. Dem Vorteil des höheren Standschubs der Mantelstromtriebwerke stehen deutliche Nachteile gegenüber, beispielsweise der erhöhte Fertigungsaufwand mit engen Toleranzen und die relativ schlechte Aerodynamik beim Vorwärtsflug.

Aus der US 2006/0266881 A1 ist ein gattungsgemäßes Fluggerät mit mehreren elektrisch angetriebenen Rotoren oder Propellern bekannt. Das beschriebene Fluggerät weist Propeller auf, die auf unterschiedlichen Ebenen liegen, wobei sich die Rotorkreisflächen überlappen. Dies kann aerodynamische Nachteile mit sich bringen. Zum Antrieb der Propeller werden Elektromotoren mit Bürsten und Getrieben verwendet, was einen relativ hohen Verschleiß und Wartungsaufwand bedeutet. Darüber hinaus ist allein der Pilot per Steuerknüppel für die Lageregelung des vorbekannten Fluggeräts verantwortlich, was eine Verwendung des Fluggeräts für Personen ohne einschlägige Ausbildung und Erfahrung grundsätzlich ausschließt.

Aus der WO 2008/147484 A2 ist ein modulares Flug-Fahrzeug bekannt, bei dem acht Propeller um eine zentrale Einheit herum angeordnet sind, welche zentrale Einheit aus einem Landfahrzeug gebildet ist, das mit einem Luftfahrzeug gekoppelt ist.

Der Erfindung liegt die Aufgabe zugrunde, ein kostengünstiges, verschleiß- und wartungsarmes Fluggerät der eingangs genannten Art zu schaffen, welches auch von fliegerisch wenig oder gar nicht vorgebildeten Personen einfach und sicher verwendet werden kann. Das Fluggerät soll sich durch geringe Abmessungen und Gewicht auszeichnen und für einen Einsatz als manntragendes Fluggerät oder für den ferngesteuerten bzw. autonomen Transport von Nutzlasten eignen.

Diese Aufgabe wird erfindungsgemäß gelöst durch ein senkrecht startendes und landendes Fluggerät mit den Merkmalen des Anspruchs 1. Vorteilhafte Weiterbildungen der Erfindung sind Gegenstand von Unteransprüchen, deren Wortlaut hier durch ausdrückliche Bezugnahme in die Beschreibung aufgenommen wird, um Textwiederholungen zu vermeiden.

Erfindungsgemäß ist ein senkrecht startendes und landendes Fluggerät zum Transport von Personen oder Lasten mit mehreren, vorzugsweise gleichartigen und redundanten, im Wesentlichen in einer Fläche oder Ebene angeordneten Elektromotoren und Propellern, wobei jedem Propeller ein eigener Elektromotor zum Antreiben des Propellers zugeordnet ist, während für die Lageregelung des Fluggeräts wenigstens ein Lagesensor in signaltechnischer Wirkverbindung mit wenigstens einer Signalverarbeitungseinheit vorgesehen ist, welche Signalverarbeitungseinheit dazu ausgebildet oder eingerichtet ist, die Lageregelung unter Berücksichtigung von Messdaten des Lagesensors durch Regelung der Drehzahl wenigstens eines Teils der Elektromotoren automatisiert durchzuführen, vorzugsweise durch signaltechnisches Einwirken auf den Elektromotoren jeweils zugeordnete Drehzahlsteller, so dass sich das Fluggerät ohne Steuereingaben eines Piloten oder einer Fernsteuerung jederzeit mit der durch die Propeller definierten Fläche oder Ebene im Wesentlichen waagerecht im Raum befindet, dadurch gekennzeichnet, dass die Elektromotoren und Propeller in wenigstens einem hexagonalen Grundmuster angeordnet sind und die Anzahl der Elektromotoren und Propeller mindestens jeweils zwölf beträgt.

Die vorstehend beschriebene Lageregelung des erfindungsgemäßen Fluggeräts sorgt also dafür, dass sich das Fluggerät ohne Steuereingaben des Piloten oder der Fernsteuerung immer waagerecht im Raum befindet. Unter dem Begriff "waagerecht im Raum" sei vorliegend eine Orientierung verstanden, bei der sich eine durch die im Wesentlichen flächig angeordneten Propeller definierte Fläche waagerecht im Raum, d.h. etwa parallel zum Erdboden bzw. mit ihrem Normalenvektor parallel zur Richtung der Schwerebeschleunigung ausgerichtet ist. Dies entspricht einem Ruhe-Schwebezustand des Fluggeräts. Die Lageregelung erfolgt - wie bereits ausgeführt - unter Berücksichtigung von Messdaten des wenigstens einen Lagesensors, welche Messdaten von der wenigstens einen Signalverarbeitungseinheit signal- und/oder rechentechnisch verarbeitet bzw. ausgewertet werden. Ein entsprechend erzeugtes Lageregelungssignal der Signalverarbeitungseinheit dient zur Regelung der Drehzahl wenigstens eines Teils der Antriebsmotoren (Elektromotoren). Darüber hinaus erfolgt die Lageregelung, wie ebenfalls bereits ausgeführt, automatisch, und zwar dergestalt, dass sich das Fluggerät insbesondere ohne Steuereingaben eines Piloten und einer Fernsteuerung waagerecht im Raum befindet. Die hexagonale Anordnung der Elektromotoren und Propeller sorgt dafür, die erforderliche Fläche und entsprechend die äußeren Maße sowie das Gewicht des Fluggeräts möglichst gering zu halten, und die Anordnung von mindestens zwölf Propellern und Elektromotoren trägt entscheidend zu einer Minimierung von Sicherheitsrisiken im Flugbetrieb bei.

Im Zuge einer ersten Weiterbildung der vorliegenden Erfindung ist vorgesehen, dass die Signalverarbeitungseinheit als Mikroprozessor, digitaler Signalprozessor, Mikrocontroller, FPGA (Field Programmable Gate Array), digitaler Regler, analoger Prozessor, Analogrechner, analoger Regler, wie z.B. PID-Regler, oder als hybride Verarbeitungseinheit aus analogen und digitalen Elementen ausgebildet ist. Auf diese Weise lässt sich die Lageregelung des Fluggeräts flexibel an die jeweiligen schaltungstechnischen und/oder genehmigungsrechtlichen Vorgaben anpassen.

Im Zuge einer anderen Weiterbildung des erfindungsgemäßen Fluggeräts ist vorgesehen, dass der Pilot seine Steuereingaben mit Hilfe eines Steuerknüppels oder Joysticks tätigt, der an eine elektronische Steuereinheit, welche zumindest die Signalverarbeitungseinheit, den Lagesensor und gegebenenfalls weitere Bestandteile umfasst, angeschlossen ist. Die Steuerangaben des Piloten oder alternativ einer Fernsteuerung werden mit den Sensordaten überlagert, und die Drehzahlen der Elektromotoren werden entsprechend angepasst, sodass die gewünschte Fluglage bzw. Geschwindigkeit in einer Richtung erreicht wird.

Im Zuge einer besonders vorteilhaften Weiterbildung des erfindungsgemäßen Fluggeräts ist vorgesehen, dass wenigstens eine Anzahl der Elektromotoren als bürstenlose Gleichstrommotoren (BLDC) ausgebildet sind. Auf diese Weise wird eine besonders kostengünstige, da verschleiß- und wartungsarme Realisierung erreicht.

Wieder eine andere Weiterbildung des erfindungsgemäßen Fluggeräts sieht vor, dass die Wirkverbindung zwischen jedem Elektromotor und dem zugehörigen Propeller getriebelos nach Art eines Direktantriebs ausgebildet ist. Auch eine solche Realisierung trägt zu einer besonders kostengünstigen Ausgestaltung des Fluggeräts bei. Außerdem lässt sich durch den Verzicht auf Getriebe eine Reduktion der Masse des Fluggeräts erreichen, was sich positiv auf die transportierbare Nutzlast auswirkt.

Besonders bevorzugt ist eine doppelt hexagonale Anordnung der Elektromotoren und Propeller, woraus sich - bei Freihaltung eines zentralen Bereichs, worauf weiter unten noch genauer eingegangen wird - eine äußerst bevorzugte Anzahl an Elektromotoren und Propellern ergibt, die vorzugsweise 18 beträgt. Grundsätzlich sieht eine entsprechende Weiterbildung des erfindungsgemäßen Fluggeräts verallgemeinernd vor, dass dieses mindestens jeweils zwölf Elektromotoren und Propeller aufweist.

Obwohl es grundsätzlich im Rahmen der vorliegenden Erfindung liegt, die Propeller oder Rotoren mit Überlapp anzuordnen, sieht eine andere bevorzugte Weiterbildung des erfindungsgemäßen Fluggeräts vor, dass die Propeller im Wesentlichen in einer gemeinsamen Ebene angeordnet sind, welche Ebene durch die von den Propellern überstrichenen Rotorkreisflächen definiert ist, wobei sich die Propeller bzw. Rotoren nicht überlappen.

Damit das Fluggerät bei minimalem Gewicht eine möglichst große Stabilität aufweist, sieht eine äußerst bevorzugte andere Weiterbildung des erfindungsgemäßen Fluggeräts vor, dass zumindest die Elektromotoren und Propeller sowie gegebenenfalls weitere Bestandteile des Fluggeräts an einer Rahmen-Tragstruktur angeordnet sind, wobei der Rahmen aus einem Raumtragwerk mit vorzugsweise zug- und druckfesten Streben gebildet ist. Die Streben sind über Knotenpunkte miteinander verbunden, und die Krafteinleitung, insbesondere die Einleitung der durch die Elektromotoren und die Propeller verursachten Gewichts- und Schubkräfte, erfolgt in den Knotenpunkten des Raumtragwerks.

Vorliegend wird unter dem Begriff "Raumtragwerk" eine Struktur aus miteinander verbundenen Streben oder dergleichen verstanden, welche nicht flächig in einer Ebene, sondern dreidimensional im Raum ausgebildet ist bzw. angeordnet sind. Insbesondere gegenüber den eingangs erwähnten Modellbau-Fluggeräten ergibt sich so eine deutliche Verbesserung der erreichbaren Stabilität, da bei solchen Modellbau-Fluggeräten regelmäßig Biegeträger zum Einsatz kommen, die entsprechend durch die Komponenten des Fluggeräts, insbesondere die Propeller und Motoren, auf Biegung und Torsion belastet werden. Die vorgeschlagene Verwendung eines Raumtragwerks bei dem erfindungsgemäßen Fluggerät trägt dazu bei, dass die Streben der Rahmen-Tragstruktur jeweils nur auf Zug und Druck belastet werden, wodurch der vorliegend beschriebene Multikopter mit seinem elektrischen Antrieb relativ große Nutzlasten sicher tragen und befördern kann.

Um im Betrieb des erfindungsgemäßen Fluggeräts die resultierende Lärmbelastung nach Möglichkeit zu reduzieren, sieht eine andere Weiterbildung vor, dass die Propeller möglichst weit von den Streben des Raumtragwerks beabstandet angeordnet sind. Unter dem Begriff "möglichst weit beabstandet" sei vorliegend verstanden, dass die Propeller auf möglichst langen, jedoch hinreichend stabilen Propellerwellen angeordnet sind, sodass bei einer erforderlichen Stabilität ein großer Abstand von den genannten Streben der Rahmen-Tragstruktur erreicht wird. Zusätzlich oder alternativ kann vorgesehen sein, dass die Streben zumindest im Bereich der Propeller aerodynamisch ausgebildet sind, vorzugsweise im Querschnitt etwa tropfenförmig, um dem Propeller-Luftstrom möglichst wenig Strömungswiderstand entgegenzubringen. Hierzu ist es sinnvoll, wenn die abgerundete Vorderseite des Tropfenprofils dem Propeller zugewandt ist. Wie der Fachmann erkennt, ist der Strebenquerschnitt jedoch nicht auf die vorliegend exemplarisch erwähnte Tropfenform beschränkt, sondern kann auch jede andere aerodynamisch günstige Formgebung annehmen.

Wie bereits erwähnt, beruht die Lageregelung bei einem erfindungsgemäßen Fluggerät auf der rein elektronischen Drehzahländerung einzelner Elektromotoren. Es ist deshalb anders als bei vorbekannten Fluggeräten nicht erforderlich, eine Blattverstellung für den einzelnen Propeller vorzusehen. In diesem Zusammenhang sieht eine andere Weiterbildung des erfindungsgemäßen Fluggeräts vor, dass die Propeller im Wesentlichen starr und ohne Blattverstellung ausgebildet sind. Dabei können die Wurzeln der Rotorblätter der Propeller eine definierte Flexibilität zum Ausgleich von Schlag- und Schwenkbewegungen besitzen, welche Schlag- und Schwenkbewegungen auch von vorbekannten Fluggeräten, wie Hubschrauber oder dergleichen bekannt sind. Vorteilhafter Weise sind die Propeller hierbei in einem faserverstärkten Kunststoffmaterial ausgebildet, wobei die Blattwurzel eine erhöhte Flexibilität aufgrund einer nur unidirektionalen Ausrichtung der Fasern in diesem Bereich aufweisen kann. Starre Propeller ohne Blattverstellung weisen einen deutlich geringeren Verschleiß, eine höhere Wartungsfreundlichkeit und eine größere Betriebssicherheit gegenüber Propellern mit Blattverstellung oder Gelenken auf.

Wie bereits erwähnt wurde, weist das erfindungsgemäße Fluggerät wenigstens zwölf oder mehr Propeller und eine entsprechende Anzahl an Elektromotoren auf. Vorteilhafter Weise sind in diesem Zusammenhang auch die Signalverarbeitungseinheit und Lagesensoren wenigstens einfach redundant ausgeführt, um ein weiter erhöhtes Maß an Ausfallsicherung zu erreichen.

Die Verwendung von vielen, relativ kleinen Propellern ermöglicht - anders als bei vorbekannten Rotor-Fluggeräten - bei einer entsprechenden Weiterbildung des erfindungsgemäßen Fluggeräts durch Freihalten eines zentralen Bereichs den Einbau und die Verwendung eines nach oben öffnenden Rettungsfallschirms für das gesamte Fluggerät einschließlich Pilot bzw. Nutzlast.

Um das Gierverhalten des erfindungsgemäßen Fluggeräts positiv zu beeinflussen, sieht eine andere Weiterbildung desselben vor, dass wenigstens ein Teil der Propeller gegenüber einer Ebene geneigt angeordnet ist, vorzugsweise mit einem zumindest betragsmäßig gleichen Neigungswinkel, wobei die genannte Ebene durch die von den restlichen, nicht geneigten Propellern überstrichenen Rotorkreisflächen definiert sein kann. Der genannte Neigungswinkel beträgt vorzugsweise etwa zwischen 1° und 5°. Ob der genannte Neigungswinkel gegenüber der genannten Ebene positiv oder negativ ist, kann vom Drehsinn des betreffenden Propellers abhängen. Vorzugsweise sind die geneigten Propeller an den äußeren Ecken der erwähnten hexagonalen Anordnung vorgesehen.

Um das erfindungsgemäße Fluggerät möglichst flexibel einsetzen zu können, sieht eine wieder andere Weiterbildung vor, dass das Fluggerät und hier insbesondere die erwähnte Rahmenstruktur zum Transport in mehrere Teile zerlegbar ist. Besonders vorteilhaft hat sich hierbei herausgestellt, wenn die Rahmenstruktur in mehrere Auslegermodule mit vorzugsweise jeweils mehreren, beispielsweise jeweils drei Elektromotoren und Propellern zerlegbar ist. Die genannten Elektromotoren und Propeller jedes Auslegers können in einer Dreieck-Konfiguration angeordnet sein. Zusätzlich oder alternativ kann das Fluggerät über einen Faltmechanismus verfügen, beispielsweise um durch einfaches Verschwenken der genannten Auslegermodule zu einer platzsparenden Transportkonfiguration zu gelangen.

Um für das erfindungsgemäße Fluggerät einen Drehmomentausgleich zu erreichen, sieht eine andere bevorzugte Weiterbildung vor, dass jeweils gleich viele links laufende wie rechts laufende Propeller vorgesehen sind.

Eine äußerst bevorzugte Weiterbildung des erfindungsgemäßen Fluggeräts sieht vor, dass dieses eine Pilotenkanzel oder einen Sitz für wenigstens einen Piloten aufweist. Die Pilotenkanzel oder der Sitz kann unterhalb einer Ebene der Propeller angeordnet sein, vorzugsweise etwa zentral, höchst vorzugsweise gerade unterhalb des Rettungsfallschirms.

Eine andere vorteilhafte Weiterbildung des erfindungsgemäßen Fluggeräts sieht vor, dass die Pilotenkanzel oder der Sitz um die Nickachse des Fluggeräts schwenkbar aufgehängt ist, und zwar vorzugsweise an der weiter oben angesprochenen Rahmenstruktur. Die Aufhängung der Pilotenkanzel bzw. des Sitzes kann trennbar ausgeführt sein, um die Pilotenkanzel oder den Sitz von dem restlichen Fluggerät zu lösen, sodass sich insbesondere die Pilotenkanzel auch autonom fortbewegen kann, beispielsweise auf dem Wasser oder auf dem Land.

In diesem Zusammenhang hat es sich als weiterhin vorteilhaft herausgestellt, wenn das erfindungsgemäße Fluggerät im Zuge einer wieder anderen Weiterbildung ein Landegestell mit elastischen, vorzugsweise luftgefüllten Elementen, Rädern, Kufen oder dergleichen aufweist. Dieses Landegestell kann an der Pilotenkanzel oder an dem Sitz angeordnet sein.

Um die Reichweite des erfindungsgemäßen Fluggeräts zu vergrößern, kann im Zuge einer anderen Weiterbildung vorgesehen sein, dass zur Versorgung der Elektromotoren wenigstens ein Energiewandler zum Bereitstellen elektrischer Energie, insbesondere während des Flugbetriebs, vorgesehen ist. Bei diesem Energiewandler kann es sich um einen Verbrennungsmotor mit Generator, eine Brennstoffzellenanordnung oder dergleichen handeln, auch in Kombination. Weiterhin ist es vorteilhaft, wenn zum Zwischenspeichern der bereitgestellten elektrischen Energie wenigstens ein Energiespeicher vorgesehen ist. Dieser Energiespeicher kann als Akkumulator, Superkondensator oder dergleichen ausgebildet sein, wiederum auch in Kombination. Weiterhin kann in diesem Zusammenhang vorgesehen sein, dass der Energiespeicher und die Elektromotoren in elektrischer Wirkverbindung stehen, um die Elektromotoren mit in dem Energiespeicher zwischengespeicherter elektrischer Energie zu versorgen. Der vorstehend angesprochene Energiewandler wird im Zuge der vorliegenden Beschreibung auch als "Range Extender" bezeichnet.

Der Energiespeicher kann im Zuge einer anderen Weiterbildung des erfindungsgemäßen Fluggeräts so angeordnet sein, dass er sich etwa zentral innerhalb des Fluggeräts befindet und zur Versorgung einer Mehrzahl von Elektromotoren dient. Alternativ kann jedoch auch vorgesehen sein, dass das Fluggerät im Zuge einer wieder anderen Weiterbildung mehrere dezentral angeordnete Energiespeicher aufweist, welche Energiespeicher zur Unterversorgung jeweils einer Untergruppe von Elektromotoren dienen. Höchst vorzugsweise ist in diesem Zusammenhang jedem Elektromotor ein eigener Energiespeicher zugeordnet.

Die vorstehend angesprochene Aufteilung der Energiespeicher (exemplarisch: Akkus) in mehrere Blöcke lässt sich hinsichtlich der Vor- und Nachteile nach verschiedenen Kriterien bewerten. Alle drei Varianten (nur ein zentraler Energiespeicher; zwei bis drei Energiespeicher; jeweils ein Energiespeicher pro Elektromotor) sind durchaus sinnvoll, und die Entscheidung wird in der Praxis aufgrund der unterschiedlichen Gewichtung der Einzelkriterien getroffen. Die Benotung erfolgt in der Reihenfolge ++/+/o/-, wobei ++ die Bestnote und die - die schlechteste Bewertung bedeutet:

| | Anordnung Akkus | | |
| --- | --- | --- | --- |
| | Zentral | 2-3 Blöcke | 18 Blöcke |
| Ausfallsicherheit | - | - | ++ |
| Handling | + | ++ | - |
| Akkus tauschen | 0 | ++ | - |
| Aufwand Gehäuse | ++ | + | - |
| Kabel zum Motorcontroller | - | o | ++ |
| Kabel zum Ladegerät | ++ | + | - |
| Aufwand BMS | ++ | + | - |
| Aufwand Ladegerät | + | + | 0 |
| Schwerpunktlage | + | ++ | 0 |
| Gewicht | + | 0 | + |
| Erwärmung | - | 0 | ++ |
| Ein-/Ausschalter | ++ | 0 | - |

Die Abkürzung BMS steht für Batterie-Managementsystem.

Um den Vorwärtsflug des erfindungsgemäßen Fluggeräts zu unterstützen bzw. zu beschleunigen, sieht eine wieder andere Weiterbildung vor, dass das Fluggerät wenigstens eine Zusatz-Antriebseinrichtung aufweist, vorzugsweise in Form eines Antriebpropellers (speziell Schubpropeller). Diese Zusatz-Antriebseinrichtung kann an der Pilotenkanzel oder dem Sitz angeordnet sein. Sie kann außerdem eine Lenkeinrichtung umfassen bzw. selbst schwenkbar ausgebildet sein.

Eine besonders einfache und kostengünstige Realisierung des erfindungsgemäßen Fluggeräts ergibt sich, wenn dieses in Weiterbildung der grundlegenden Erfindungsidee mit freilaufenden Propellern im Gegensatz zu den aus dem zitierten Stand der Technik bekannten Mantelstromtriebwerken ausgebildet ist, welche Propeller zudem vorzugsweise eine feststehende Propellerwelle aufweisen können, also nicht schwenkbar ausgebildet sind.

Die verwendeten Propeller oder Rotoren sollten einerseits so groß wie möglich sein, um einen möglichst hohen Wirkungsgrad zu erzielen. Andererseits sollten sie ein möglichst kleines Trägheitsmoment besitzen, um eine schnelle Schubänderung zu erreichen. Unter diesen widersprüchlichen Anforderungen existiert bei gegebenen Motortyp eine optimale Größe der Propeller, die bei entsprechender Weiterbildung der Erfindung realisiert sein kann.

Der Leistungsbedarf P für den Schwebeflug ist gegeben durch:

$$P = \frac{1}{\zeta} \sqrt{\frac{S^3}{2\rho A}}$$

mit der Schubkraft S, der Rotorfläche A, der Luftdichte $\rho$ und dem Gütegrad $\zeta$. Für den Schwebeflug muss die Schubkraft genau so groß wie die Gewichtskraft sein.

Der spezifische Schub S/P ist gegeben durch:

$$\frac{S}{P} = \zeta \sqrt{2\rho} \sqrt{\frac{1}{S/A}}$$

Dabei ist S/A die Rotorflächenbelastung.Wie man sieht, ist die Umsetzung der verfügbaren Leistung in erwünschten Schub um so besser, je größer die Rotorfläche (bzw. je kleiner die Rotorflächenbelastung) ist.

Andererseits ist das Trägheitsmoment J eines Rotors gegeben durch:

$$J = \sum_{i}^{N} m_i r_i^2$$

wobei über eine reale Massenverteilung aufsummiert wird. Aufgrund der notwendigen Festigkeit steigt auch die Masse des Rotors überproportional mit dem Durchmesser an.

Das vom Motor aufzubringende Drehmoment M ist gegeben durch:

$$M = J\alpha + P/\omega$$

wobei die notwendige Winkelbeschleunigung $\alpha$ aus der Dynamik der Steuervorgänge des gesamten Systems bestimmt werden muss. Der zweite Teil entsteht aus dem Widerstand des Rotors und ist gegeben durch den Leistungsbedarf P des Rotors bei der Winkelgeschwindigkeit $\omega$.

Die bei entsprechender Ausgestaltung des erfindungsgemäßen Fluggeräts vorzugsweise verwendeten Rotoren haben, im Gegensatz zu üblichen Flugzeugpropellern, ein sehr geringes Steigungs/Durchmesser-Verhältnis von beispielsweise etwa 0,3, um die Rotorkreisfläche möglichst groß zu machen, gleichzeitig aber das Drehmoment, und damit die Leistung, nicht zu sehr ansteigen zu lassen.

Auch beim Multikopter treten im schnellen Vorwärtsflug die bei Hubschraubern üblichen Schlag- und Schwenkbewegungen aufgrund der unterschiedlichen Auftriebe an vorlaufendem und rücklaufendem Blatt der Propeller auf. Diese Kräfte können - wie beschrieben - an den Rotoren durch entsprechende elastische Ausgestaltung derselben aufgefangen werden.

Exemplarisch sind in der folgenden Tabelle die Kenndaten für drei verschiedene Rotordurchmesser angegeben, wie sie im Rahmen der vorliegenden Erfindung verwendet werden können, wobei von einem einsitzigen Fluggerät mit 18 Rotoren ausgegangen wird, ohne dass die Erfindung hierauf beschränkt wäre.

**Leistungsbedarf für verschiedenen Propellergrößen**

| Propeller | 36 Zoll | 40 Zoll | 44 Zoll |
|---|---|---|---|
| Durchmesser [m] | 0,91 | 1,01 | 1,12 |
| Fläche [m^2] | 0,65 | 0,80 | 0,98 |
| Anzahl | 18 | 18 | 18 |
| Strahlflache [m^2] | 11,7 | 14,4 | 17,7 |
| Leermasse inkl. Akkus [kg] | 110 | 112 | 114 |
| Pilotenmasse [kg] | 80 | 80 | 80 |
| Startmasse Mtow [kg] | 190 | 192 | 194 |
| Strahlflchenbelastung [kg/m^2] | 16,2 | 13,3 | 10,9 |
| Strahlleistung ges [kW] | 14 9 | 13,7 | 12,5 |
| Wirkungsgrad Motor/Regler | 88% | 88% | 88% |
| Gütegrad Propeller | 75% | 75% | 75% |
| Eingangsleistung [kW] | 226 | 20 7 | 19 0 |

(fortgesetzt)

| Propeller | 36 Zoll | 40 Zoll | 44 Zoll |
|---|---|---|---|
| Spez Schub [N/kW] | 82 | 91 | 100 |
| Energieinhalt Akkus [kWh] | 8,0 | 8 0 | 8,0 |
| Masse Akkus [kg] | 54 | 54 | 54 |
| Flugdauer [min] | 21,2 | 23,1 | 25,3 |

Zum besseren Transport lässt sich der Multikopter im Zuge entsprechender Weiterbildung der Erfindung entweder einfach zerlegen oder zusammenfalten. Dies geschieht entweder durch eine Aufteilung in einzelne Module, die vor dem Start durch Schrauben oder Schnellverschlüsse miteinander verbunden werden, durch einen Schwenkmechanismus, durch einen Steckmechanismus oder durch einen Faltmechanismus, etwa wie bei einer Wäschespinne.

Der Multikopter ist vorteilhafter Weise nahezu wartungfrei. Dies wird im Zuge entsprechender Ausgestaltungen insbesondere durch die Verwendung von bürstenlosen Elektromotoren erreicht, die als einzige Verschleißteile Kugellager enthalten. Ansonsten wird bei entsprechender Ausgestaltung bewusst auf jegliche Mechanik verzichtet, wie etwa Getriebe, Schleifkontakte, Blattverstellung, etc. Durch diese konstruktiven Merkmale wird, neben Einfachheit und Wartungsfreundlichkeit, auch eine hohe Zuverlässigkeit erreicht. Es kommen vorzugsweise bürstenlose Außenläufer-Motoren zum Einsatz, die, passend zum Rotor, für eine entsprechend niedrige Drehzahl und höheres Drehmoment ausgelegt sind.

Die Sicherheit des Multikopters hat einen hohen Stellenwert. Durch die bevorzugte große Anzahl von Motoren (mindestens zwölf) lässt sich selbst bei Ausfall von bis zu 30% der Motoren noch eine stabile Lageregelung und kontrollierte Notlandung erreichen. Alle Systeme können redundant ausgelegt sein, so dass es bei eventuellem Ausfall immer noch Ersatz gibt. Außerdem ist ein vorzugsweise wenigstens ein Rettungsfallschirm für das komplette Fluggerät (Gesamtrettungssystem) vorgesehen. Im Gegensatz zu anderen Rotor-Fluggeräten wird dies möglich durch den freien Raum nach oben, worauf weiter oben bereits hingewiesen wurde.

Selbstverständlich ist es auch möglich, eine Mehrzahl von Rettungsfallschirmen für das komplette Fluggerät vorzusehen. Es ist hierbei besonders vorteilhaft, wenn die Aufhängungen (Leinen) der Fallschirme in der Nähe oder oberhalb des Schwerpunkts des Fluggeräts angeordnet sind. Dies gilt in gleicher Weise auch für einen einzelnen Rettungsfallschirm. Wie der Fachmann leicht erkennt, ist es in diesem Zusammenhang nicht erforderlich, dass alle Fallschirme genau im Schwerpunkt bzw. genau oberhalb des Schwerpunkts angreifen, vielmehr ist auch eine Anordnung um den Schwerpunkt herum möglich, so dass die Rettungsfallschirme in ihrer Gesamtheit im Schwerpunkt bzw. oberhalb des Schwerpunkts angreifen.

Um einen möglichst geringen Luftwiderstand zu erzielen, können sowohl die Pilotenkanzel als auch die Rahmenstruktur möglichst aerodynamisch günstig ausgestaltet sein.

Weitere Eigenschaften und Vorteile der vorliegenden Erfindung ergeben sich aus der nachfolgenden Beschreibung von Ausführungsbeispielen anhand der Zeichnungen.

Figur 1       zeigt die Draufsicht auf eine erste Ausgestaltung des erfindungsgemäßen Fluggeräts;

Figur 2       zeigt eine Frontalansicht des Fluggeräts aus Figur 1;

Figur 3       zeigt das Fluggerät gemäß Figur 2 mit geöffnetem Rettungsfallschirm;

Figur 4       zeigt eine Seitenansicht einer zweiten Ausgestaltung des erfindungsgemäßen Fluggeräts mit einer Pilotenkanzel;

Figur 5       zeigt das Fluggerät aus Figur 4 mit abgekoppelter Pilotenkanzel;

Figur 6       zeigt das Blockschaltbild einer Elektronikanordnung zur Lageregelung und Motorsteuerung bzw. Energieversorgung bei einem erfindungsgemäßen Fluggerät;

Figur 7       zeigt das Blockschaltbild einer alternativen Elektronikanordnung zur Lageregelung und Motorsteuerung bzw. Energieversorgung bei einem erfindungsgemäßen Fluggerät;

Figur 8       zeigt schematisch die Drehrichtungen der einzelnen Propeller bei einem erfindungsgemäßen Fluggerät;

Figur 9       zeigt eine Draufsicht und einen Querschnitt eines Propellers für ein erfindungsgemäßes Fluggerät;

Figur 10      zeigt schematisch die relative Winkellage der Propeller bei einem erfindungsgemäßen Fluggerät;

Figur 11      zeigt schematisch den modularen Aufbau eines erfindungsgemäßen Fluggeräts, insbesondere das Fluggerät gemäß Figur 1;

Figur 12      zeigt schematisch einen alternativen modularen Aufbau einer wieder anderen Ausführungsform des erfindungsgemäßen Fluggeräts in der Draufsicht;

Figur 13a, b      zeigen das Fluggerät gemäß Figur 12 in der Seitenansicht und in verschiedenen Flugzuständen;

Figur 14      zeigt das Fluggerät gemäß Figur 12 und Figur 13a, b in seinem Transportzustand;

Figur 15a-j      zeigen den modularen Aufbau einer anderen Ausgestaltung des erfindungsgemäßen Fluggeräts in verschiedenen Montage-/Demontagezuständen; und

Figur 16      zeigt einen Schnitt durch eine besondere Ausgestaltung eines Rotors für ein erfindungsgemäßes Fluggerät.

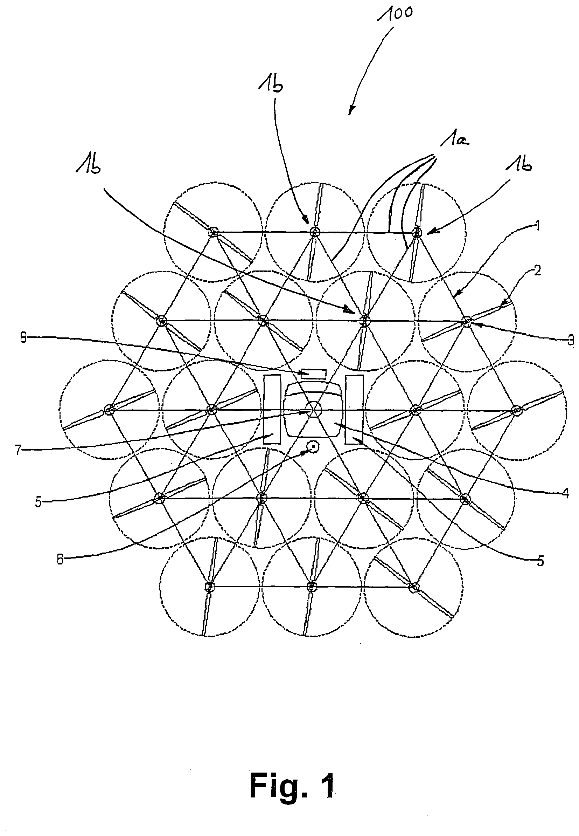

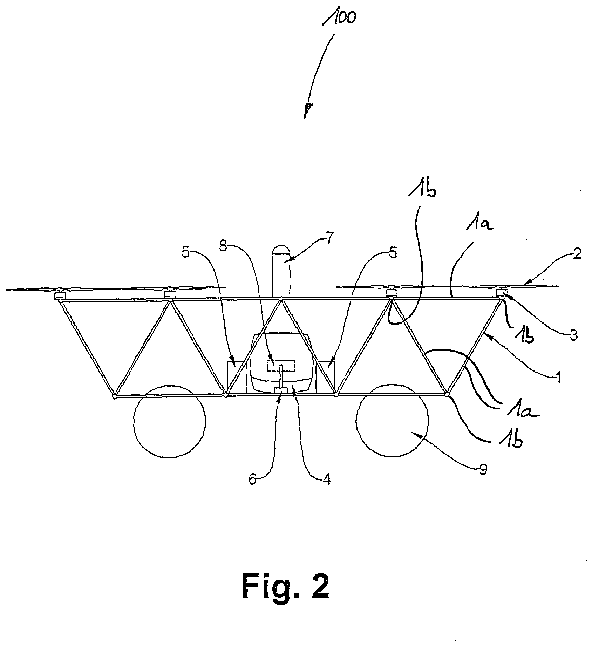

Figur 1 zeigt eine erste Ausführungsform des erfindungsgemäßen Fluggeräts in der Draufsicht. Das Fluggerät ist in der Gesamtheit mit dem Bezugszeichen 100 bezeichnet und umfasst zunächst eine insgesamt hexagonale Rahmen-Tragstruktur oder kurz Rahmenstruktur 1, die aus einer Anzahl von zug- und druckfesten Streben 1a gebildet ist, von denen in Figur 1 aus Gründen der Übersichtlichkeit nur einige wenige explizit bezeichnet sind. Die Streben 1a bilden im Wesentlichen dreieckförmige "Einheitszellen" einer insgesamt hexagonalen (sechseckigen) Anordnung und sind an Knotenpunkten 1b miteinander verknüpft, sodass sich ein dreidimensionales Raumtragwerk in Form einer dreidimensionalen Gitterkonstruktion ergibt, wie insbesondere aus der Frontalansicht gemäß Figur 2 ersichtlich ist. Die Streben 1a können in jedem geeigneten Werkstoff ausgebildet sein, der hinreichende Festigkeit und Stabilität bei gleichzeitig geringem Eigengewicht aufweist, beispielsweise in (Leicht-)Metall, Kunststoff, Holz oder in einem Hybrid-/Verbundwerkstoff.

Wie sich aus Figur 1 und Figur 2 weiterhin ergibt, sind an den oberen Knotenpunkten 1b der Rahmenstruktur 1, welche in einer gemeinsamen Ebene liegen, eine Anzahl von insgesamt 18 Propellern 2 angeordnet, die getriebelos an jeweils einen zugehörigen Elektromotor 3 gekoppelt sind und von diesem direkt angetrieben werden. Gemäß der Darstellung in Figur 1 sind die Propeller 2 derart an den Knotenpunkten 1b der Rahmenstruktur 1 bzw. des Raumtragwerks angeordnet, dass sich eine hexagonale Flächenfüllung ergibt, wobei die Position im Zentrum der Anordnung (bei Bezugszeichen 7) aus bestimmtem Grund propellerfrei bleibt, worauf weiter unten noch genauer eingegangen wird.

Als gestrichelte Kreise eingezeichnet sind in Figur 1 weiterhin noch die Rotorkreisflächen der Propeller 2, das heißt diejenigen Bereiche, die von den sich drehenden Propellern 2 überstrichen werden. Wie man der Abbildung in Figur 1 leicht entnimmt, überlappen sich bei der dort dargestellten Ausgestaltung des erfindungsgemäßen Fluggeräts 100 die Propeller 2 mit ihren Rotorkreisflächen nicht, ohne dass die vorliegende Erfindung jedoch auf eine derartige Anordnung beschränkt werden. Durch geeignete Wahl der Länge der Streben 1a bzw. der Propellerdurchmesser lassen sich auch Anordnungen erreichen, bei denen sich die Propeller 2 mit ihren Rotorkreisflächen überlappen, sodass sie entsprechend auf verschiedenen Ebenen anzuordnen wären.

Durch die bereits angesprochene Ausbildung des Rahmens als Raumtragwerk bzw. dreidimensionale Gitterkonstruktion wird eine hohe spezifische Festigkeit erreicht. Die Krafteinleitung, insbesondere der Gewichts- und Schubkräfte der Propeller 2 und Motoren 3, erfolgt an den Knotenpunkten 1b des Raumtragwerks. Dadurch werden die Streben 1a oder Träger nur auf Druck und Zug belastet, nicht jedoch auf Biegung oder Torsion. Durch diese Anordnung und die Verwendung von leichten Komponenten bzw. Materialien oder Werkstoffe für die Rahmenstruktur 1, die Propeller 2, die Motoren 3 und andere Bestandteile des Fluggeräts 100 wird das Gesamtgewicht so gering wie möglich gehalten.

Bei Bezugszeichen 4 ist in den Figuren 1 und 2 ein Pilotensitz dargestellt, der beispielsweise mittels eines elastischen Gurtzeugs in der Rahmenstruktur 1 aufgehängt sein kann, was in den Figuren aus Gründen der Übersichtlichkeit nicht genauer dargestellt ist. Vorzugsweise erfolgt die Aufhängung des Pilotensitzes 4 an den Knotenpunkten 1b der Rahmenstruktur 1. Die elastische Aufhängung des Pilotensitzes 4 ermöglicht ein Abfedern härterer Stöße.

Weiterhin sind in der Rahmenstruktur 1 bei Bezugszeichen 5 elektrische Energiespeicher in Form von Akkumulatoren oder dergleichen angeordnet. Vorliegend sind zwei derartige Energiespeicher (Akkus) 5 vorhanden, um das Gesamtgewicht besser zu verteilen und um eine gewisse Redundanz der Energieversorgung zu gewährleisten. Die Energiespeicher 5 sind mit den Elektromotoren 3 verbunden und dienen zu deren Versorgung mit elektrischer Energie. Wesentlich dabei ist, dass die Energiespeicher 5 eine möglichst hohe elektrische Energiedichte aufweisen. Neben den bereits erwähnten Akkumulatoren können zu diesem Zweck auch Superkondensatoren oder Brennstoffzellen verwendet werden, auch in beliebiger Kombination. Zur Erzielung längerer Flugzeiten kann optional ein Verbrennungsmotor mit Generator oder ein anderer Energiewandler als sogenannter Range Extender vorgesehen sein, der die Energiespeicher 5 während des Fluges nachlädt. Ein solcher Range Extender ist in den Figuren 1 und 2 nicht eingezeichnet, hierauf wird weiter unten noch genauer eingegangen.

Bezugzeichen 6 in den Figuren 1 und 2 bezeichnet einen Steuerknüppel nach Art eines Joysticks, welcher dazu dient, Steuerbefehle und Lagevorgaben eines in dem Sitz 4 befindlichen Piloten (nicht gezeigt) an eine Lageregelungs- und Steuerregelungselektronik zu übertragen, welche ihrerseits mit den Elektromotoren 3 in signal- bzw. steuerungstechnischer Wirkverbindung steht, um über die jeweilige Motordrehzahl das Flugverhalten des Fluggeräts 100 insgesamt zu beeinflussen. Die genannte Elektronik ist in den Figuren 1 und 2 bei Bezugszeichen 8 dargestellt und kann insbesondere in der Nähe des Pilotensitzes 4 (vorliegend hinter dem Pilotensitz 4) angeordnet sein.

Bezugzeichen 7 in den Figuren 1 und 2 bezeichnet einen Rettungsfallschirm für das gesamte Fluggerät 100 einschließlich Pilot bzw. Nutzlast, vorliegend in seinem zusammengelegten und verpackten Zustand. Der Rettungsfallschirm 7 ist in dem propellerfreien Zentralbereich der Rahmenstruktur 1 angeordnet, auf den bereits hingewiesen wurde, damit er sich nach oben frei entfalten kann. Es können alternativ mehrere (kleine) Fallschirme vorgesehen sein, die gemeinsam ein sogenanntes Gesamtrettungssystem bilden. Der Fallschirm 7 ist abweichend von den Figuren 1 und 2 bevorzugt unterhalb einer durch die Propeller 2 definierten Ebene angeordnet, damit ggf. umherfliegende Propeller-Bruchteile (z.B. bei Vogelschlag) ihn möglichst nicht beschädigen.

Bezugzeichen 9 (vgl. Figur 2) bezeichnet das Landegestell des Fluggeräts 100, welches gemäß der in Figuren 1 und 2 gezeigten Ausführungsform in Form von luftgefüllten Bällen ausgebildet ist, die zum einen als Federung dienen und zum anderen bei Wasserlandungen des Fluggeräts 100 in der Art von Schwimmern wirken, um ein Versinken des Fluggeräts 100 zu vermeiden.

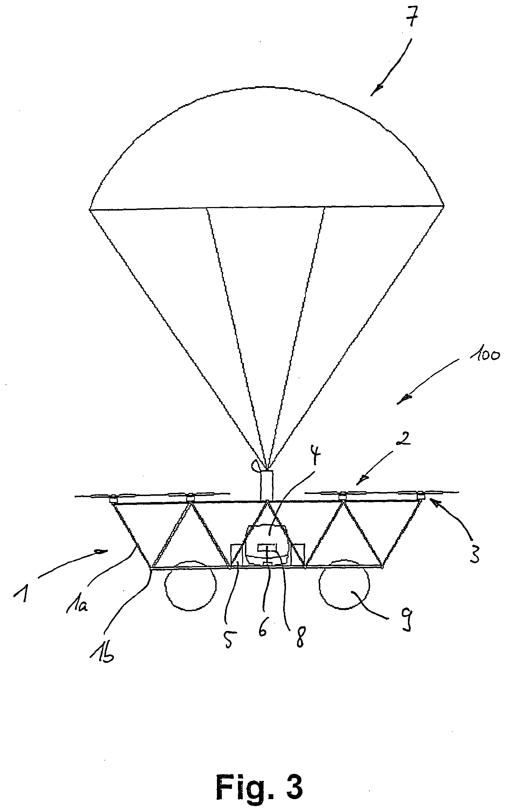

Figur 3 zeigt das Fluggerät 100 gemäß den Figuren 1 und 2 mit geöffnetem Rettungsfallschirm 7, um das Fluggerät 100 insbesondere bei Ausfall einer übermäßigen Anzahl von Elektromotoren 3 oder bei sonstigen Störungen sicher zu Boden zu geleiten. Ansonsten entsprechen die Bezugszeichen in Figur 3 denjenigen in Figuren 1 und 2.

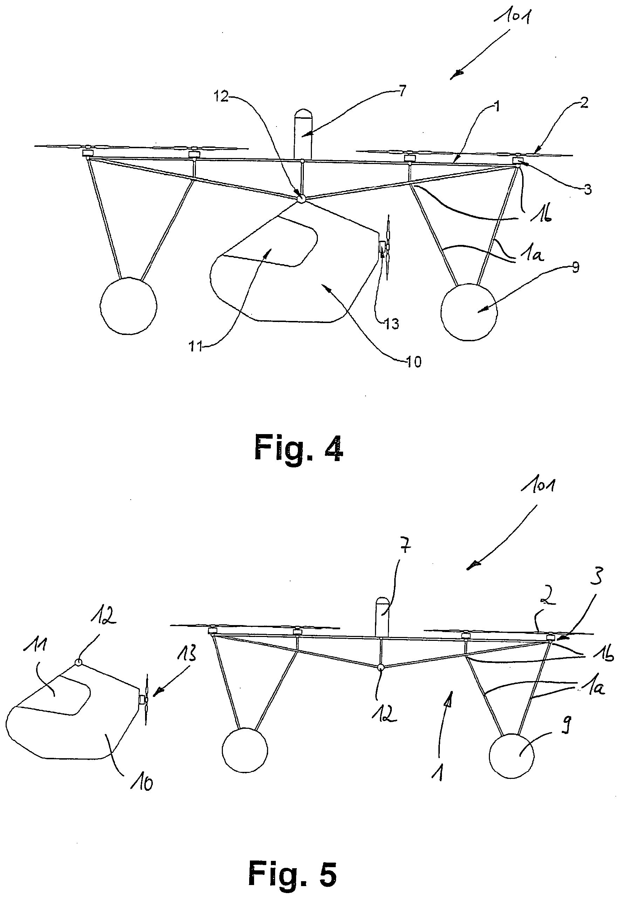

In den Figuren 4 und 5 ist eine alternative Ausgestaltung des erfindungsgemäßen Fluggeräts dargestellt, welches entsprechend in seiner Gesamtheit mit dem Bezugszeichen 101 bezeichnet ist. Ansonsten entsprechen wiederum gleiche Bezugszeichen gleichen oder gleich wirkenden Elementen.

Die Rahmenstruktur 1 ist gemäß den Figuren 4 und 5 wiederum aus Streben 1a gebildet, die an Knotenpunkten 1b miteinander verknüpft sind, weist jedoch eine gegenüber den Figuren 1 - 3 abweichende Gesamtgeometrie auf. Anstelle des "offenen" Pilotensitzes 4 gemäß den Figuren 1 - 3 weist die Ausgestaltung gemäß den Figuren 4 und 5 eine geschlossene Pilotenkabine oder -kanzel 10 auf, die eine Frontscheibe 11 besitzt, um dem Piloten (nicht gezeigt) den Ausblick zu ermöglichen. Die Kanzel oder Kabine 10 ist bei Bezugszeichen 12 gelenkig an der Rahmenstruktur 1 aufgehängt. Vorzugsweise ist das Gelenk 12 als Schwenkgelenk ausgebildet, sodass die Kanzel oder Kabine 10 um die in Figur 4 und 5 senkrecht zur Blattebene orientierte Nickachse des Fluggeräts 101 schwenkbar ist. Wie in Figur 5 dargestellt ist, kann die Kanzel oder Kabine 10 im Bereich des Gelenks 12 von der Rahmenstruktur 1 getrennt werden, um sich insbesondere auch autonom vorzubewegen. Zu diesem Zweck weist die Kanzel oder Kabine 10 eine eigene (Zusatz-)Antriebseinrichtung nach Art eines Schubpropellers 13 mit entsprechendem Motor (vorzugsweise ebenfalls elektrisch betrieben) auf, welche Antriebseinrichtung vorliegend im hinteren Bereich der Kanzel oder Kabine 10 angeordnet ist. Dennoch ist die Erfindung keinesfalls auf eine derartige Anordnung der Zusatz-Antriebseinrichtung beschränkt, welche alternativ auch als Zugpropeller im vorderen Bereich der Kanzel oder Kabine 10 ausgebildet sein könnte.

Zu Steuerungszwecken ist die Antriebseinrichtung bzw. der Schubpropeller 13 bezüglich der Kanzel oder Kabine 10 schwenkbar ausgebildet oder mit einem Seitenruder (nicht gezeigt) versehen. Die Kanzel oder Kabine 10 selbst ist vorzugsweise schwimmfähig ausgebildet und kann sich so nach Abkopplung von dem restlichen Fluggerät 101 bzw. der Rahmenstruktur 1 gemäß Figur 5 autonom, insbesondere auch im Wasser, fortbewegen. Falls die Kanzel oder Kabine 10 alternativ oder zusätzlich mit einem Fahrwerk bzw. Rädern, Kufen oder dergleichen (hier nicht gezeigt) ausgerüstet ist, ist auch eine Fortbewegung auf dem Land (ebener Untergrund, Straße, Eis, Schnee, ...) möglich.

Die in den Figuren 1 - 3 bei den Bezugszeichen 4, 5, 6 und 8 weiterhin dargestellten Bestandteile des erfindungsgemäßen Fluggeräts 100 befinden sich bei der Ausführungsform 101 gemäß den Figuren 4 und 5 innerhalb der Kanzel oder Kabine 10 und sind deshalb nicht gesondert dargestellt.

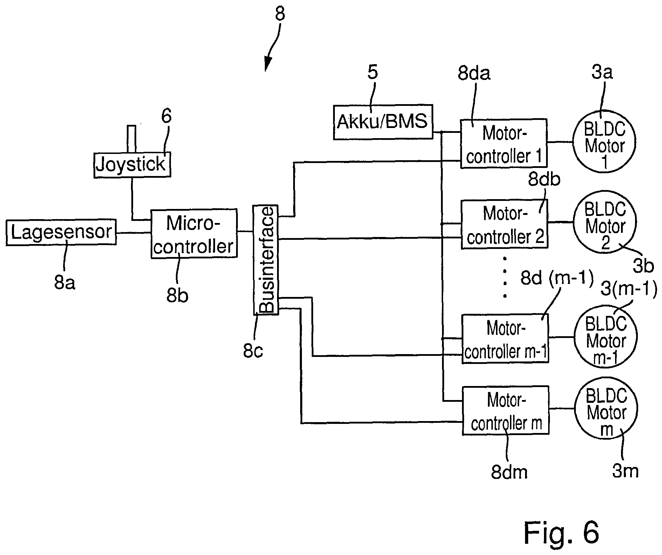

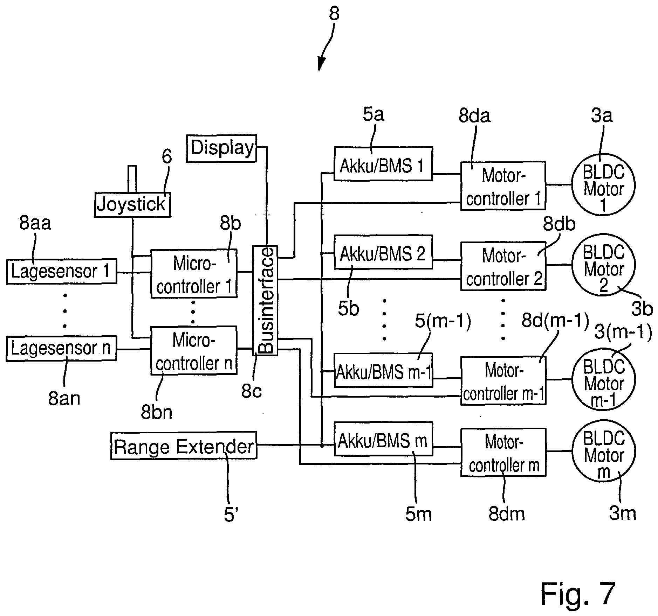

Figuren 6 und 7 zeigen mögliche Ausgestaltungen für elektronische Anordnungen (Elektronikanordnungen) zur Lageregelung und Steuerung des Fluggeräts 100 bzw. 101. Die genannten Elektronikanordnungen sind in den Figuren 6 und 7 jeweils insgesamt mit dem Bezugszeichen 8 bezeichnet, welches dem bereits erwähnten Bezugszeichen 8 gemäß den Figuren 1 - 3 grundsätzlich entspricht, insbesondere was die Anordnung der betreffenden Elektronik innerhalb des Fluggeräts 100 bzw. 101 betrifft.

Gemäß dem Blockschaltbild in Figur 6 umfasst die Lageregelungs-/Steuerungselektronik 8 zunächst einen Lagesensor 8a, welcher Lagesensor 8a dazu ausgebildet ist, die Lage und Orientierung des Fluggeräts im Raum hinsichtlich der drei translatorischen und der drei rotatorischen Freiheitsgrade laufend messtechnisch zu erfassen. Gemäß der alternativen Ausgestaltung in Figur 7 ist die genannte Lagesensorik redundant ausgebildet und umfasst dort erste bis n-te Lagesensoren 8aa bis 8an. Der Lagesensor 8a bzw. die Lagesensoren 8aa-n steht bzw. stehen in signaltechnischer Wirkverbindung mit (jeweils) einer Signalverarbeitungseinheit, vorliegend exemplarisch und ohne Beschränkung jeweils einem Microcontroller 8b bzw. 8ba - 8bn. Der bzw. die Microcontroller 8b bzw. 8ba - n sind über ein Businterface 8c mit Motorsteuereinheiten (Motorcontroller) 8da - 8dm nach Art eines Drehzahlstellers signaltechnisch verbunden, wobei jeder Motorcontroller 8da - m jeweils einem von insgesamt m bürstenlosen Elektromotoren 3a - 3m zugeordnet ist, um letzteren insbesondere zur Anpassung der Motordrehzahl anzusteuern.

Gemäß der Ausgestaltung in Figur 6 ist ein einzelner, zentraler Energiespeicher 5 mit Batterie-Managementsystem BMS vorgesehen, welcher Energiespeicher 5 mit sämtlichen Motorcontrollern 8da - m leitungstechnisch verbunden ist, um diese bzw. die zugehörigen Elektromotoren 3a - m mit elektrischer Energie zu versorgen. Dagegen existieren bei der Ausgestaltung gemäß Figur 7 mehrere Energiespeicher 5a - 5m, wobei jedem Motorcontroller 8da - m ein eigener Energiespeicher 5a - m zugeordnet ist. Weiter ist bei der Ausgestaltung gemäß Figur 7 ein Range Extender 5' vorgesehen, worauf weiter oben bereits hingewiesen wurde. Dieser ist leitungstechnisch mit den Energiespeichern 5a - m verbunden und sorgt dafür, dass diese während des Fluges immer einen ausreichend gefüllten Speicherzustand aufweisen. Der Range Extender 5' kann insbesondere als Verbrennungsmotor mit Generator, als Brennstoffzellenanordnung oder in anderer Art und Weise ausgebildet sein.

Wie der Fachmann leicht erkennt, lassen sich Elemente der Elektronikanordnung 8 gemäß Figur 6 und Figur 7 quasi beliebig kombinieren. So kann beispielsweise der Range Extender 5' gemäß Figur 7 auch bei der Ausgestaltung gemäß Figur 6 zum Einsatz kommen, um den dortigen Energiespeicher 5 aufzuladen. Des Weiteren liegt es im Rahmen der vorliegenden Erfindung, eine Mehrzahl von Energiespeichern 5 vorzusehen, welche Mehrzahl nicht der Anzahl an eingesetzten Motorcontrollern entsprechen muss. So ist es beispielsweise möglich, dass jeder Energiespeicher zwei, drei oder k Motorcontroller versorgt, wobei gilt: k ≤ m. Das Gleiche gilt sinngemäß für die Anzahl der Lagesensoren und/oder Microcontroller. Auch der Range Extender 5' gemäß Figur 7 kann redundant ausgebildet sein.

Den Ausgestaltungen in den Figuren 6 und 7 ist gemein, dass an den bzw. an die Microcontroller 8a bzw. 8ba - n der weiter oben bereits erwähnte Steuerknüppel oder Joystick 6 angeschlossen ist. Mittels des Steuerknüppels oder Joysticks 6 ist es dem Piloten möglich, Lageregelungs- oder Steuerungsvorgaben in vorzugsweise digitaler, elektrischer Form an den bzw. die Microcontroller 8b bzw. 8ba - n zu übertragen, welche Vorgaben dort gemeinsam mit den Messdaten des Lagesensors 8a bzw. der Lagesensoren 8aa - n zur Lageregelung und zur Steuerung des Fluggeräts verwendet werden. Wenn mehrere Microcontroller 8ba - n vorhanden sind, können sich diese gegenseitig kontrollieren, um die Flugsicherheit zu erhöhen. Aus den von den Lagesensoren 8a bzw. 8aa - n gelieferten und von den Microcontrollern 8b bzw. 8ba - n ausgewerteten Daten für die Lage, Geschwindigkeiten und Beschleunigungen des Fluggeräts im dreidimensionalen Raum werden die Steuerinformationen für die Elektromotoren 3a - m bzw. die zugehörigen Motorcontroller 8a - m berechnet, sodass mit dem erfindungsgemäßen Fluggerät ein gleichmäßiges Schweben, auch unter äußeren Störungen, wie Windböen und Turbulenzen, möglich ist.

Die Steuerung erfolgt - wie bereits erwähnt - durch elektronische Regelung jedes einzelnen Elektromotors 3a - m. Dabei können mehrere Motoren 3a - m zu Gruppen zusammengefasst werden. Dies ist in Abwandlung der Figuren 6 und 7 dahingehend zu verstehen, dass dann ein Motorcontroller mehreren Motoren zugeordnet ist, um diese bezüglich ihrer Drehzahl anzusteuern.

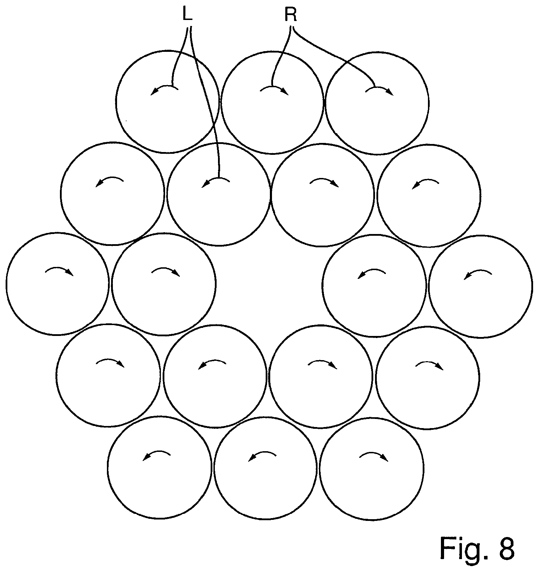

Es sind vorzugsweise gleich viele links laufende wie rechts laufende Propeller bzw. Motoren vorhanden, um so einen Drehimpulsausgleich zu erzielen und eine Drehung des Fluggeräts insgesamt zu vermeiden. Dies ist in Figur 8 exemplarisch dargestellt, wobei dort nur die von den Propellern überstrichenen Kreisflächen bzw. deren Umkreise dargestellt sind (vgl. Figur 1). Pfeile R bezeichnen rechts laufende Propeller, während Pfeile L links laufende Propeller bezeichnen. Aus Gründen der Übersichtlichkeit sind nicht alle Pfeile in Figur 8 explizit bezeichnet. Der bereits angesprochene Drehimpulsausgleich impliziert, dass immer eine gerade Anzahl von Propellern vorhanden sein sollte. Die konkrete Darstellung in Figur 8 zeigt eine sinnvolle Verteilung der Drehrichtungen, wobei nach Möglichkeit einander gegenüberliegende Propeller entgegengesetzte Drehrichtungen R, L aufweisen.

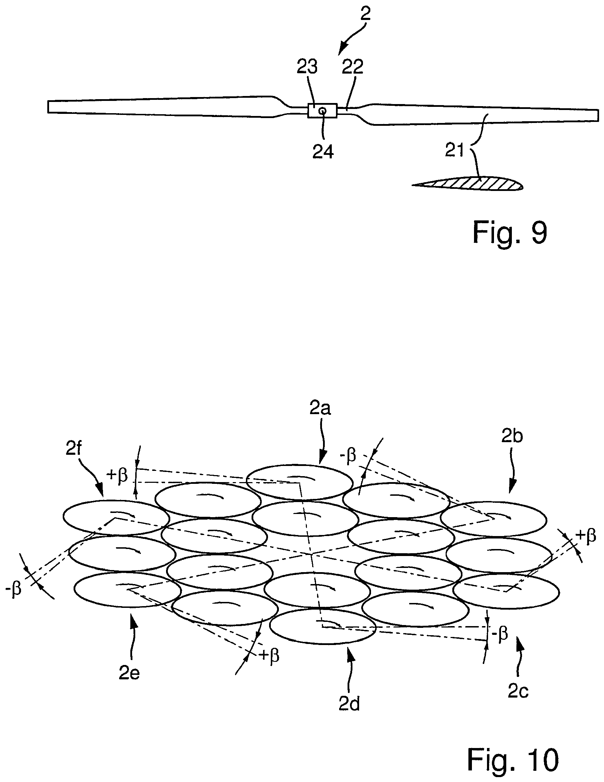

Ein Steigen oder Sinken des Fluggeräts 100, 101 wird dadurch erreicht, dass die Drehzahlen aller Motoren 3 bzw. 3a - m leicht erhöht bzw. vermindert werden. Die Steuerung der Nick- und Rollbewegungen erfolgt durch Erhöhung der Drehzahlen mehrerer Motoren 3, 3a - m auf jeweils einer Seite des Fluggeräts, während die Motordrehzahlen auf der gegenüberliegenden Seite entsprechend verringert werden (vorne/hinten bzw. rechts/links). Der Gesamtschub bleibt dabei unverändert. Die Gierbewegung wird dadurch gesteuert, dass bei allen Motoren 3, 3a - m einer Drehrichtung R, L die Drehzahl erhöht wird, während bei der anderen Drehrichtung die Drehzahl vermindert wird. Der Gesamtschub bleibt auch hierbei unverändert. Um das Ansprechen des Fluggeräts 100, 101 in Richtung der Gierbewegung zu erhöhen, sind einige Propeller 2 und Motoren 3, 3a - m um einen kleinen Winkel gegen die Horizontale geneigt, wobei die Horizontale der weiter oben anhand von Figur 1 erwähnten Ebene entspricht. Dies ist in Figur 10 anschaulich dargestellt.

Figur 10 zeigt die Propelleranordnung gemäß Figur 1 oder Figur 8, bei der sechs Propeller gegenüber der erwähnten Horizontalebene geneigt sind. Diese Propeller sind in Figur 10 explizit mit Bezugszeichen 2a - 2f bezeichnet. Dargestellt sind wiederum nur die Umkreise der überstrichenen Rotorkreisflächen. Gemäß der Darstellung in Figur 10 sitzen die geneigten Propeller 2a - f an den äußeren Ecken der hexagonalen Anordnung und besitzen somit den größtmöglichen Hebelarm um die Hochachse des Fluggeräts 100, 101. Bei in der Draufsicht links drehenden Propellern - gemäß Figur 10 sind dies die Propeller 2a, 2c und 2f - ist der angegebene Kipp- oder Neigungswinkel Beta (β) positiv (+Beta), bei rechts drehenden Propellern ist der Winkel Beta negativ (-Beta). Der Betrag des Kipp- oder Neigungswinkels liegt, je nach gewünschtem Ansprechverhalten, zwischen etwa 1° und 5°. Die Neigungsrichtung ist so gewählt, dass die Gierbewegung des Fluggeräts gleichsinnig zur Laufrichtung des Propellers unterstützt wird.

In Figur 9 sind noch zwei Ansichten einer möglichen Ausgestaltung der Propeller 2 bzw. 2a - f gezeigt, nämlich eine Draufsicht und eine kleinere Querschnittansicht eines Propeller- oder Rotorblatts 21. Neben den bereits angesprochenen Rotorblättern 21 weist der Propeller oder Rotor 2 eine Nabe 23 auf, wobei die Rotorblätter 21 mit der Nabe 23 über sogenannte Blattwurzeln 22 verbunden sind. Bei Bezugszeichen 24 ist zudem ein Durchbruch 24 für die Motorwelle (nicht gezeigt) dargestellt. Die im Rahmen der vorliegenden Erfindung vorzugsweise verwendeten Propeller oder Rotoren 2 haben - im Gegensatz zu üblichen Flugzeugpropellern - ein sehr geringes Steigungs-/Durchmesserverhältnis von beispielsweise 0,3, um die Rotorkreisfläche möglichst groß zu machen, gleichzeitig aber das Drehmoment und damit die erforderliche Antriebsleistung möglichst gering zu halten.

Auch bei den hier vorgestellten Fluggeräten treten im schnellen Vorwärtsflug die bei herkömmlichen Hubschraubern üblichen Schlag- und Schwenkbewegungen aufgrund der unterschiedlichen Auftriebskräfte am vorlaufenden und rücklaufenden Rotorblatt 21 auf. Diese Kräfte lassen sich dadurch auffangen, dass die Blattwurzeln 22 der Propeller bzw. Rotoren 2 elastisch ausgebildet sind. Zu diesem Zweck können die Rotorblätter 21 und die Blattwurzeln 22 aus einem Faserverbundwerkstoff bestehen, vorzugsweise aus mit Kohlefaser verstärktem Kunststoff (CFK). Die Nabe 23 ist dabei vorzugsweise in Aluminium oder einem vergleichbaren Material ausgebildet, und die Blattwurzeln 22 sind in die Nabe 23 eingespannt, welche ihrerseits durch die Motorwelle (bei Bezugszeichen 24) zentriert wird. Um die Elastizität im Bereich der Blattwurzel gezielt einzustellen, werden dort ausschließlich unidirektionale Fasern verwendet, die gestaffelt, das heißt mit unterschiedlicher Länge bis in das Rotorblatt 21 hineinreichen. Am Rotorblatt 21 selbst wird als Decklage vorzugsweise ein Gewebe eingesetzt.

Das Auffangen der Schlag- und Schwenkkräfte kann alternativ auch durch eine ausreichend robuste, steife Auslegung der Rotorblatter und der Motorwelle erreicht werden. Die Rotorblätter sind dann möglichst wenig elastisch, sondern unelastisch (steif) und hinreichend robust ausgeführt.

Bei herkömmlichen Hubschraubern werden vorzugsweise symmetrische Rotorblatt-Profile verwendet, die zwar eine bessere Druckpunktstabilität bei der zyklischen Blattverstellung besitzen, gegenüber asymmetrischen Profilen jedoch den Nachteil eines geringeren Auftriebs mit sich bringen. Bei den hier vorgeschlagenen Fluggeräten 100, 101, welche vorteilhafter Weise über keine Möglichkeit der Blattverstellung verfügen, lassen sich somit asymmetrische Rotorblatt-Profile mit höherem Auftrieb verwenden. Ein solches Blattprofil ist unten rechts in Figur 9 beispielhaft dargestellt.

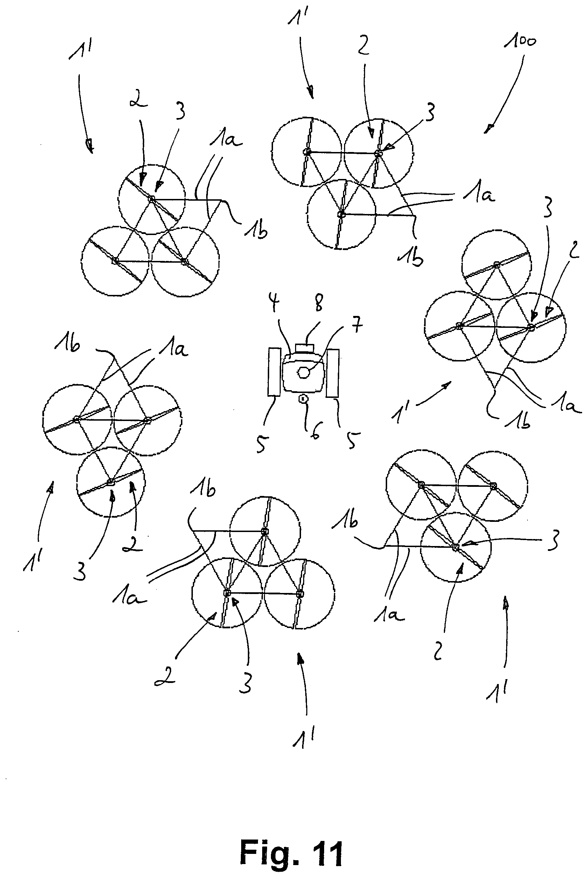

Figur 11 zeigt schematisch anhand des Fluggeräts 100 gemäß Figur 1 und Figur 2 dessen möglichen modularen Aufbau zwecks einer Verbesserung der Transportfähigkeit.

Wie die schematische Darstellung in Figur 11 zeigt, ist die Rahmenstruktur 1 (Figur 1) in eine Reihe von Modulen 1' zerlegbar, welche Module jeweils drei Propeller oder Rotoren 2 mit den zugehörigen Elektromotoren 3 umfassen, und zwar jeweils in einer ebenen dreieckförmigen Anordnung. Dabei sind die einzelnen Rahmenstruktur-Module 1' wiederum aus Streben 1a zusammengefügt, welche an Knotenpunkten 1b miteinander verbunden sind. Aus Gründen der Übersichtlichkeit sind auch in Figur 11 nicht alle Streben 1a bzw. Knotenpunkte 1b explizit bezeichnet. Die Verbindung der einzelnen Module 1' untereinander kann durch Verschrauben, Verspannen, Verclipsen, Verrasten oder auf sonstige geeignete Weise erfolgen. Anschließend wird die "Zentraleinheit" aus Pilotensitz 4, Energiespeichern 5, Steuerknüppel 6, Rettungsfallschirm 7 und Elektronikanordnung 8 mit der zusammengefügten Rahmenstruktur verbunden, um das vollständige Fluggerät 100 herzustellen.

Eine alternative Lösung sieht vor, die einzelnen Module 1' nicht vollständig trennbar, sondern übereinander klappbar oder faltbar auszubilden, um auf diese Weise ebenfalls eine raumsparende Transportmöglichkeit für das Fluggerät 100 zu schaffen. Zu diesem Zweck sind an geeigneten Modul-Verbindungsstellen entsprechende Scharnier- oder Gelenkeinrichtungen vorzusehen, wie der Fachmann ohne Weiteres erkennt.

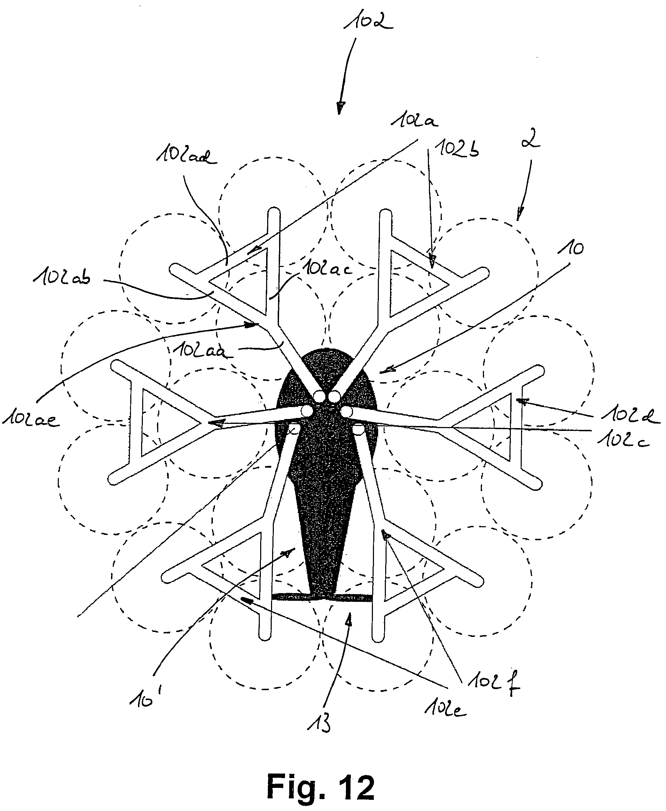

Die Figuren 12, 13a, 13b und 14 zeigen eine andere Ausgestaltung des erfindungsgemäßen Fluggeräts, welches hier in seiner Gesamtheit mit dem Bezugszeichen 102 bezeichnet ist. Analog zum Fluggerät 101 gemäß den Figuren 4 und 5 ist eine Kanzel oder Kabine 10 vorhanden, welche nach hinten in einem Bereich 10' rumpfartig verlängert ist und im Heckbereich wiederum eine Zusatz-Antriebseinrichtung 13 nach Art eines Schubpropellers mit entsprechender Motoranordnung aufweist (vgl. Figur 4 und 5). Die einzelnen Propeller oder Rotoren 2 sind wiederum nur über ihre gestrichelt gezeichneten Rotorkreisflächen bzw. ihre Umkreise symbolisiert. Jeweils drei dieser Propeller oder Rotoren mit den zugeordneten Elektromotoren (in Figuren 12 bis 14 nicht gezeigt) sind an astartig verzweigten Auslegern angeordnet, die in den genannten Figuren mit den Bezugszeichen 102a bis 102f bezeichnet sind. Wie in Figur 12 exemplarisch anhand des Auslegers 102a gezeigt ist, besteht jeder Ausleger aus einem ersten Arm 102aa, der mit der Kanzel oder Kabine 10 verbunden ist, von welchem ersten Arm 102aa nach Art einer Y-Konfiguration ein zweiter Arm 102ab und ein dritter Arm 102ac abzweigen. In Richtung der freien Enden der zweiten und dritten Arme 102ab, 102ac ist zwischen diesen eine Verbindungsstrebe 102ad angeordnet. Der genannte Abzweigungsbereich der zweiten und dritten Arme 102ab, 102ac von dem ersten Arm 102aa ist in Figur 12 mit dem Bezugszeichen 102ae bezeichnet. An den freien Enden der zweiten und dritten Arme 102ab, 102ac sowie in dem Verzweigungsbereich 102ae sind die Elektromotoren (nicht gezeigt) und Propeller 2 angeordnet.

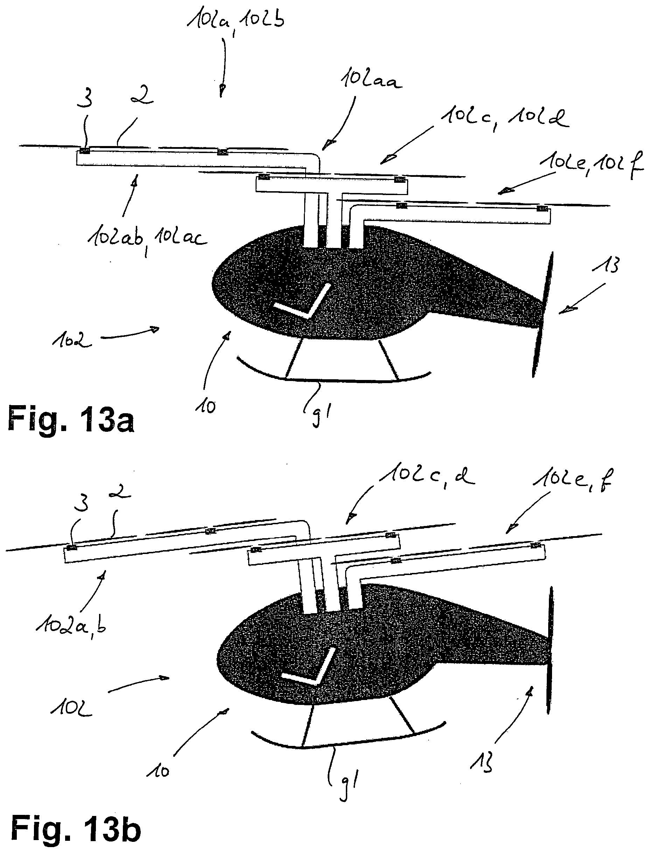

Die genannten ersten bis dritten Arme 102aa - c der Ausleger 102a - f sind im Wesentlichen in einer gemeinsamen Ebene angeordnet, während das freie Ende des ersten Arms 102aa gemäß der Darstellung in den Figuren 13a und 13b um etwa 90° gegenüber dieser Ebene (nach unten) abgewinkelt ist, um die Ausleger 102a - f mit dem restlichen Fluggerät 102 zu verbinden. Aus Gründen der Übersichtlichkeit ist dies in den Figuren 13a, 13b wiederum nur für ausgewählte Ausleger explizit dargestellt.

Wie Figur 13a und Figur 13b noch zu entnehmen ist, weisen die genannten Abwinklungen der ersten Arme 102aa unterschiedliche Längenabmessungen auf, sodass die Propeller 2 der Ausleger 102a, 102b, der Ausleger 102c, 102d sowie der Ausleger 102e und 102f im Ruhe-Schwebezustand des Fluggeräts 102 gemäß Figur 13a auf unterschiedlichen Ebenen gestaffelt angeordnet sind. Figur 13b zeigt das Fluggerät 102 gemäß Figur 13a beim Vorwärtsflug. Aufgrund der Vorwärtsneigung des Fluggeräts 102 ergeben sich so effektiv im Wesentlichen zwei parallele Rotorebenen.

Gemäß den Figuren 13a, b ist die Kanzel oder Kabine 10 an ihrer Unterseite mit Kufen 9' ausgestattet, worauf bereits weiter oben hingewiesen wurde.

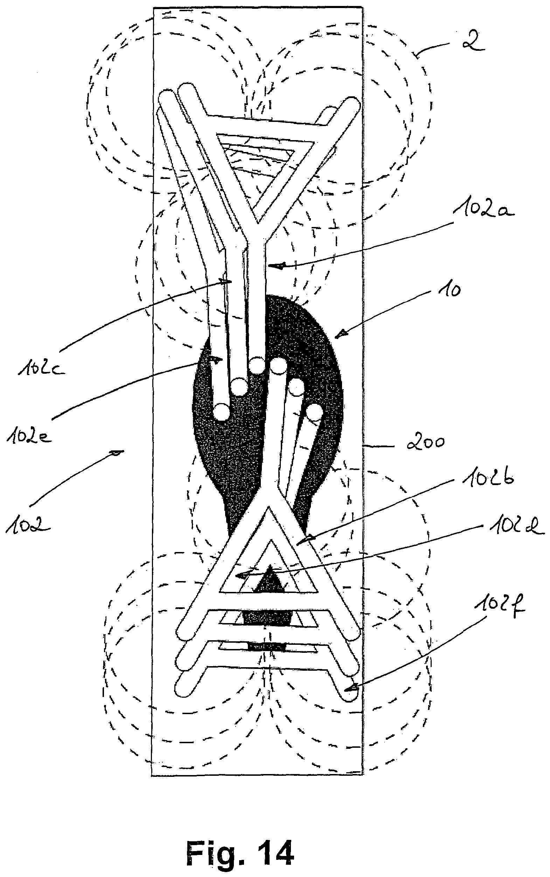

Figur 14 zeigt das Fluggerät 102 gemäß den Figuren 12, 13a und 13b im zerlegten bzw. zusammengelegten Zustand auf einer Transporteinrichtung 200, wie der Ladefläche eines Anhängers oder Lastkraftwagens. Die einzelnen Ausleger 102a - f können vom Rumpf des Fluggeräts 102 bzw. der Kanzel oder Kabine 10 abmontiert sein. Es besteht jedoch auch die Möglichkeit, die Ausleger 102a, c, e um ihre Anbindungspunkte an der Kanzel oder Kabine 10 gelenkig nach vorne und übereinander zu schwenken, während die Ausleger 102b, d und f entsprechend übereinander nach hinten verschwenkt werden. Hierzu sind an der Kanzel oder Kabine 10 entsprechende Gelenkverbindungen mit den abgewinkelten Enden der ersten Auslegerarme 102aa vorzusehen.

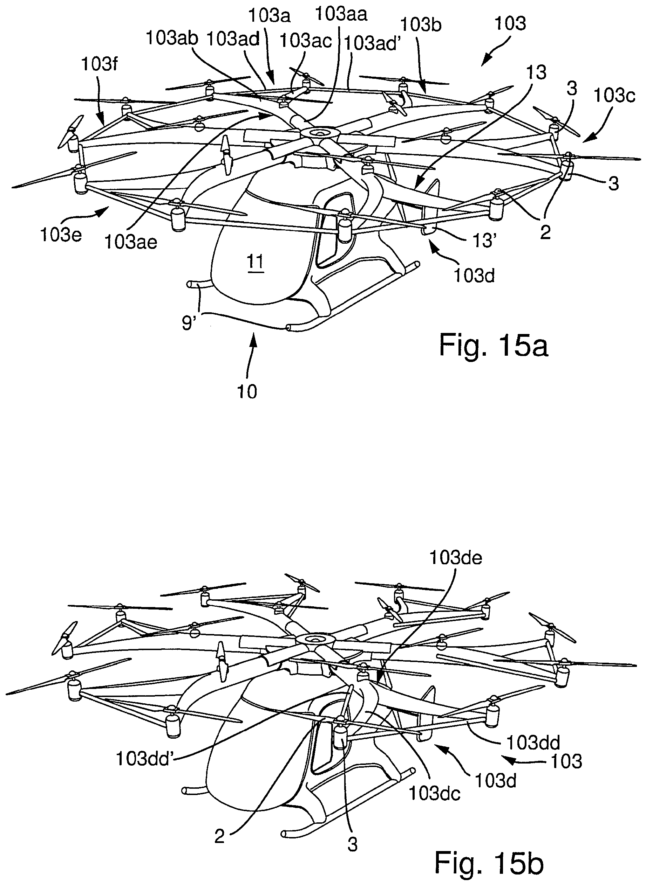

Die Figuren 15a-15j zeigen eine weitere Ausgestaltung des erfindungsgemäßen Fluggeräts, welches hier mit den Bezugzeichen 103 versehen ist. Das Fluggerät 103 umfasst wiederum eine Pilotenkanzel oder Pilotenkabine 10 mit Kufen 9' und zusätzlicher Antriebsvorrichtung 13 (vgl. Figuren 13a, b), welche zusätzlich noch mit einem Leitwerk 13' kombiniert ist. Die Propeller 2 zusammen mit den zugehörigen Elektromotoren 3, welche aus Gründen der Übersichtlichkeit nicht in ihrer Gesamtheit bezeichnet sind, sitzen ähnlich wie bei der Ausgestaltung gemäß Figur 12 auf Y-förmigen, astartig verzweigten Auslegern 103a-103f. Ansonsten entsprechen die Elemente mit den Bezugszeichen 103aa-103ae in funktionaler Hinsicht den Elementen mit den Bezugszeichen 102aa-102ad in Figur 12.

Ein wesentlicher Unterschied zwischen der Ausgestaltung gemäß den Figuren 12, 13a und 13b einerseits und den Figuren 15a-15j andererseits ist die nach außen gekrümmte Formgebung der zweiten und dritten Ausleger-Arme 103ab, 103ac. Außerdem sind bei der Ausgestaltung gemäß den Figuren 15a-15j alle Ausleger 103a-f in einer gemeinsamen Ebene angeordnet, worauf weiter unten noch genauer eingegangen wird.

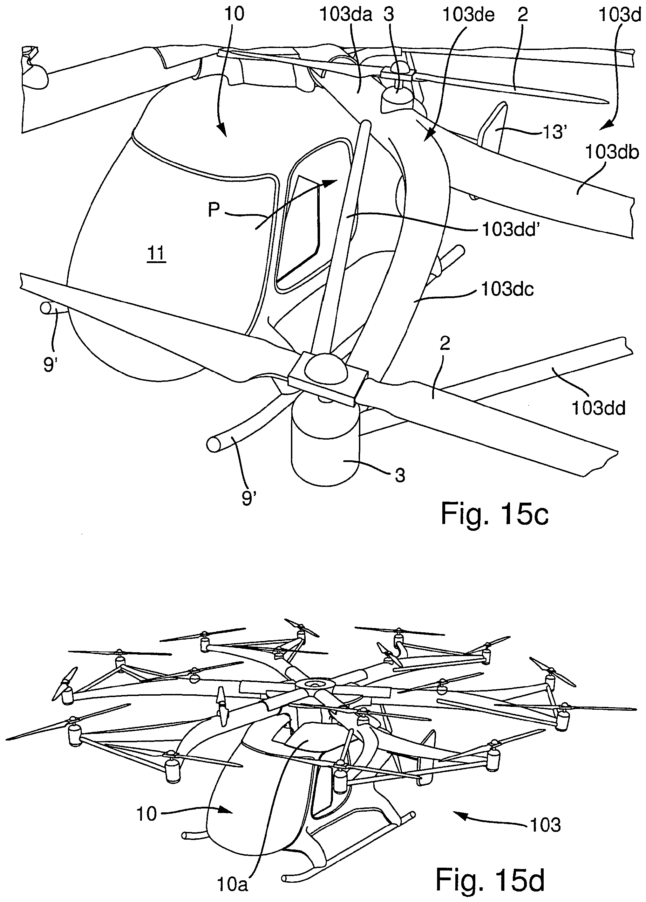

Zwischen den einzelnen Auslegern 103a-f finden sich abweichend von Figur 12 weitere Verbindungsstreben 103ad', welche benachbarte Elektromotoren 3 (bzw. deren Gehäuse) benachbarter Ausleger 103a-f miteinander verbinden. Hierauf wird anhand von Figur 15b und Figur 15c genauer eingegangen.

Ausgehend von Figur 15a zeigen nun die folgenden Figuren 15b bis 15j verschiedene Montage-/Demontagezustände des Fluggeräts 103. Aus Gründen der Übersichtlichkeit sind in diesem Zusammenhang in den Figuren 15b-j nicht alle Elemente des Fluggeräts 103 explizit bezeichnet, sondern die Bezeichnung beschränkt sich auf solche Elemente, denen in dem jeweiligen Montage-/Demontagezustand eine besondere Wirkung oder Funktion zukommt.

In Figur 15b ist exemplarisch für die Verbindungsstrebe 103dd' gezeigt, dass die Zwischenverbindungsstreben der einzelnen Ausleger schwenkbar mit dem jeweils dritten Arm 103dc des Auslegers 103d verbunden sind. Dabei erfolgt die Anlenkung der Verbindungsstrebe 103dd' am freien Ende des dritten Arms 103dc, wo auch der betreffende Motor 3 mit Propeller 2 angeordnet ist. Die Verbindungsstrebe 103dd' lässt sich so zum Demontieren des Fluggeräts 103 im Bereich der Verzweigung 103de an den Ausleger 103d anlegen.

Figur 15c zeigt den vorstehend beschriebenen Sachverhalt anhand einer Detaildarstellung. Die Figur zeigt detailliert die Verbindungsstrebe 103dd', welche in Richtung des Pfeils P durch Verschwenken an den restlichen Ausleger 103d angelegt wurde.

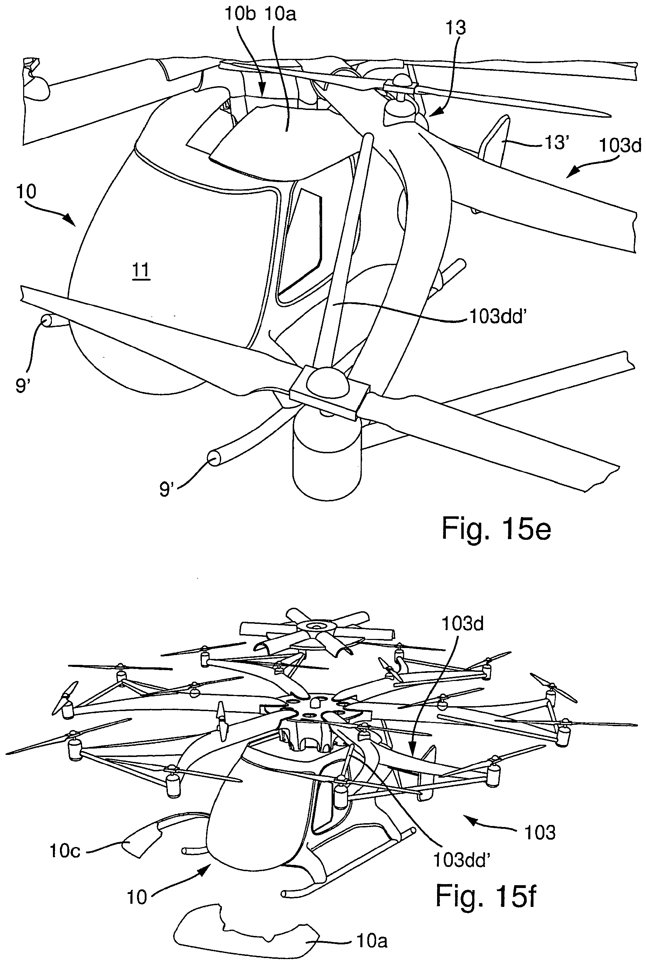

Figur 15d zeigt, wie im oberen Bereich der Pilotenkanzel oder -kabine 10 ein erstes Deckelelement 10a entfernt wird, was in Figur 15e noch detaillierter dargestellt ist. Das Deckelelement 10a ist in der Draufsicht, beispielsweise gemäß Figur 15f, etwa U-förmig ausgebildet und deckt einen oberen, seitlichen Bereich der Pilotenkanzel 10 ab, wobei es sich mit seiner Kontur an eine zentrale Befestigungsstruktur 10b für die Ausleger 103a-f anschmiegt, auf welche Befestigungsstruktur 10b weiter unten noch genauer eingegangen wird.

In Figur 15f ist zusätzlich noch ein dem ersten Deckelelement 10a entsprechendes zweites Deckelelement 10c dargestellt, welches den anderen oberen Seitenbereich der Pilotenkanzel 10 abdeckt.

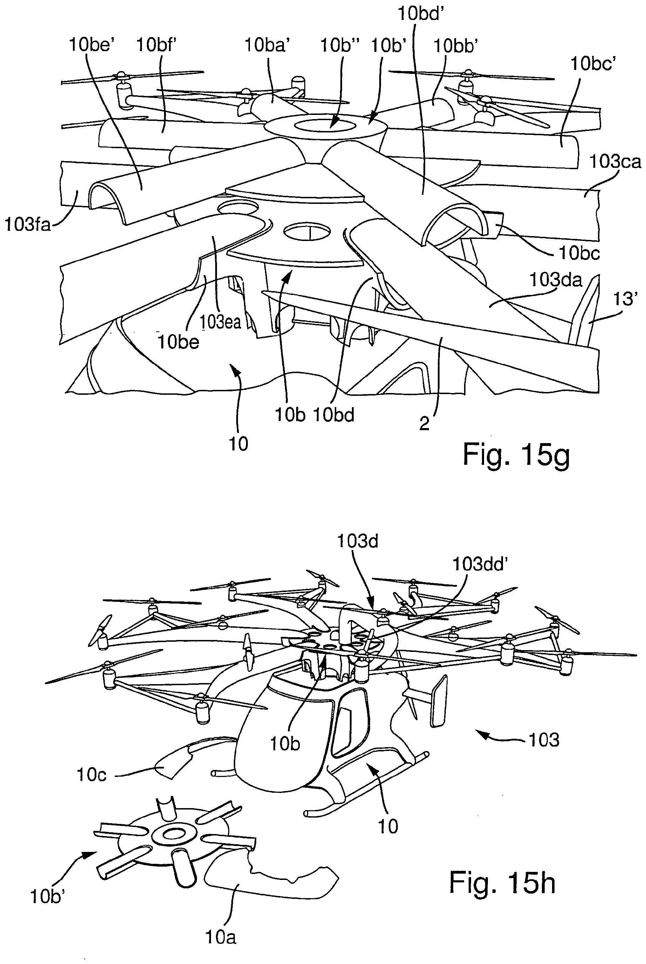

Figur 15g zeigt eine Detailansicht des oberen Bereichs der Pilotenkanzel 10 mit der zentralen Befestigungsstruktur 10b, welche nach oben öffnende, rohr- bzw. rinnenförmige Aufnahmen 10ba-10bf aufweist, von denen in Figur 15g aus Darstellungsgründen nur einige (10bc, 10bd, 10be) wenige erkennbar sind. Die genannten rohr-/rinnenförmigen Aufnahmen dienen zum Aufnehmen der freien Enden der ersten Arme, z.B. 103da, 103ea und 103fa, der Ausleger 103a-f (vgl. Figur 15a). Die Ausleger 103a-f sind mit ihren freien Enden der ersten Arme in die genannten rohr-/rinnenförmigen Aufnahmen der zentralen Befestigungsstruktur 10b eingesteckt und dort in nicht näher bezeichneter Weise befestigt, beispielsweise verschraubt.

Zusätzlich ist in Figur 15g noch ein sternförmiges Deckelelement 10b' zum Abdecken der zentralen Befestigungsstruktur 10b dargestellt, welches Deckelelement 10b' seinerseits nach unten öffnende rinnenförmige Vorsprünge 10ba'-10bf' aufweist, welche dazu vorgesehen sind, den jeweiligen ersten Arm der Ausleger 103a-f abzudecken. Das Deckelelement 10b' lässt sich mit der zentralen Befestigungsstruktur 10b fest verbinden, beispielsweise durch Verschraubung, um auf diese Weise auf die Ausleger 103a-f wirkende Kräfte gleichmäßig über die gesamte Anordnung zu verteilen. In seinem zentralen Bereich weist das Deckelelement 10b' einen Durchbruch 10b" auf, innerhalb dessen der Rettungsfallschirm 7 (vgl. beispielsweise Figuren 4 und 5) anordenbar ist. Der Rettungsfallschirm ist auf diese Weise vor äußeren Schadeinflüssen besonders gut geschützt, insbesondere vor einer Schadeinwirkung durch herumfliegende Propellerbruchteile, was beispielsweise bei Vogelschlag auftreten kann.

Figur 15h zeigt einen weiteren Montage-/Demontagezustand des Fluggeräts 103 mit entfernten Deckelelementen 10a, 10b' und 10c sowie mit nach oben herausgezogenem Ausleger 103d.

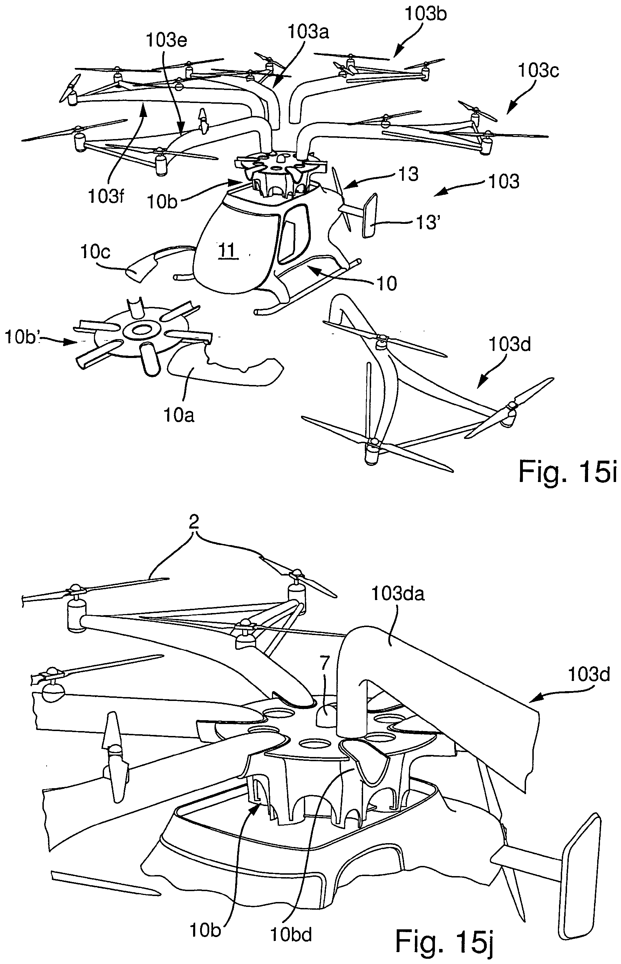

Gemäß der Darstellung in Figur 15i wurden auch die weiteren Ausleger 103a-c, 103e, 103f nach oben aus der zentralen Befestigungsstruktur 10b herausgezogen, um sie anschließend für den Transport des Fluggeräts 103 platzsparend verstauen zu können.

Die Darstellung in Figur 15j zeigt nochmals detailliert die Ausgestaltung der zentralen Befestigungsstruktur 10b nach Entfernen des zugehörigen Deckelelements 10b' (vgl. Figur 15i). Somit ist in Figur 15j auch der zentral angeordnete Rettungsfallschirm 7 erkennbar. Des Weiteren lässt sich aus Figur 15j mit Blick auf die Querschnittsform der rinnenförmigen Aufnahme 10bd für den Ausleger 103d bzw. dessen ersten Arm 103da auch die im Querschnitt tropfenförmige Ausgestaltung der betreffenden Arme bzw. allgemein der Tragstruktur eines erfindungsgemäßen Fluggeräts entnehmen, damit diese einem nach unten geordneten Luftstrom der Propeller 2 möglichst wenig Luftwiderstand entgegensetzt und dementsprechend aerodynamisch günstig ausgebildet ist, um insbesondere Lärmentwicklung zu reduzieren. Hierauf wurde weiter oben bereits textlich hingewiesen.

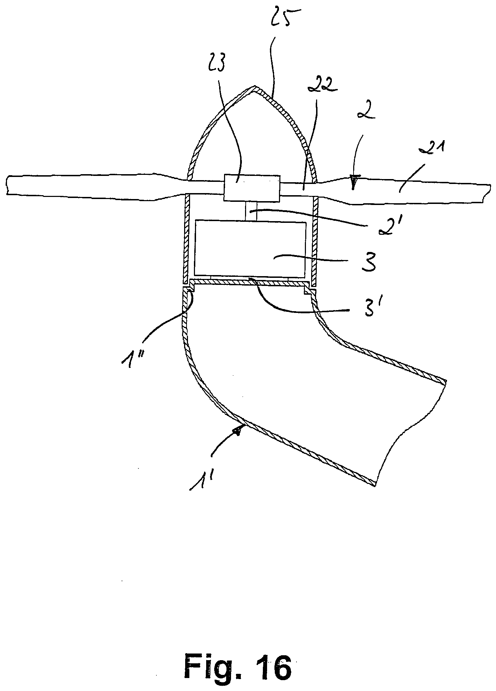

Auch die Darstellung in Figur 16 betrifft eine aerodynamisch günstige Weiterbildung des erfindungsgemäßen Fluggeräts, welche insbesondere bei der Ausgestaltung gemäß den Figuren 15a-15j zum Einsatz kommen kann. Allerdings ist die Verwendung der Weiterbildung gemäß Figur 16 keinesfalls nur auf die zuletzt beschriebene Ausgestaltung des Fluggeräts beschränkt. Die Schnittansicht gemäß Figur 16 zeigt beispielhaft einen Propeller 2 mit zugehöriger Propellerwelle 2' und Antriebs-Elektromotor 3, wobei die genannte Anordnung an einem in Figur 16 mit dem Bezugszeichen 1' bezeichneten Rahmenteil des Fluggeräts befestigt ist. Bei dem genannten Rahmenteil 1' kann es sich beispielsweise um das freie Ende eines Auslegerarmes gemäß den Figuren 15a-j handeln. Bezugszeichen 23 in Figur 16 bezeichnet die Rotornabe (vgl. Figur 9).

Bei der Ausgestaltung gemäß Figur 16 ist vorgesehen, dass die Rotornabe 23 einschließlich des Motors 3 mit einer konischen Verkleidung 25 versehen ist, die üblicherweise als "Spinner" bezeichnet wird. Dadurch wird die Aerodynamik und der Wirkungsgrad der Rotoren verbessert. Die Verkleidung bzw. der Spinner 25 umschließt gemäß der Darstellung in Figur 16 auch den Motor 3 und geht von seiner Form her in den Rahmen bzw. das Rahmenteil 1' über. Zu diesem Zweck ist an dem freien Ende des Rahmenteils eine umlaufende Stufe 1" ausgebildet, so dass die Verkleidung 25 in diesem Bereich das Rahmenteil 1 überlappt. Obwohl dies in Figur 16 nicht dargestellt ist, kann in dem Überlappungsbereich eine Dichtung, beispielsweise eine Labyrinthdichtung, vorgesehen sein, um den Motor 3 vor Feuchtigkeit, insbesondere vor Spritzwasser, zu schützen.

Die stromlinienförmige Verkleidung 25 (der Spinner) dreht sich mit dem Rotor bzw. Propeller 2 mit. Bezugszeichen 3' in Figur 16 bezeichnet eine Motorbefestigung, welche zum Befestigen des Motors 3 an dem Rahmenteil 1 dient.

**Patentansprüche**

**1.** Senkrecht startendes und landendes Fluggerät (100, 101, 102, 103) zum Transport von Personen oder Lasten mit mehreren, vorzugsweise gleichartigen und redundanten, im Wesentlichen in einer Fläche angeordneten Elektromotoren (3, 3a-m) und Propellern (2, 2a-f), wobei jedem Propeller ein eigener Elektromotor zum Antreiben des Propellers zugeordnet ist, wobei für die Lageregelung des Fluggeräts (100, 101, 102, 103) wenigstens ein Lagesensor (8a, 8aa-an) in signaltechnischer Wirkverbindung mit wenigstens einer Signalverarbeitungseinheit (8b, 8babn) vorgesehen ist, welche Signalverarbeitungseinheit dazu ausgebildet oder eingerichtet ist, die Lageregelung unter Berücksichtigung von Messdaten des Lagesensors durch Regelung der Drehzahl wenigstens eines Teils der Elektromotoren (3, 3a-m) automatisiert durchzuführen, vorzugsweise durch signaltechnisches Einwirken auf den Elektromotoren jeweils zugeordnete Drehzahlsteller (8da-8dm), so dass sich das Fluggerät ohne Steuereingaben eines Piloten oder einer Fernsteuerung jederzeit mit der durch die Propeller (2, 2a-f) definierten Fläche im Wesentlichen waagerecht im Raum befindet,

**dadurch gekennzeichnet, dass**
die Elektromotoren (3, 3a-m) und Propeller (2, 2a-f) in wenigstens einem hexagonalem Grundmuster angeordnet sind und die Anzahl der Elektromotoren (3, 3a-m) und Propeller (2, 2a-f) mindestens jeweils zwölf beträgt.

2. Fluggerät (100, 101, 102, 103) nach Anspruch 1,
**dadurch gekennzeichnet, dass**
die Signalverarbeitungseinheit (8b, 8ba-bn) als Mikroprozessor, digitaler Signalprozessor, Mikrocontroller, FPGA, digitaler Regler, analoger Prozessor, Analogrechner, analoger Regler, wie z.B. PID-Regler, oder als hybride Verarbeitungseinheit aus analogen und digitalen Elementen ausgebildet ist.

3. Fluggerät (100, 101, 102, 103) nach Anspruch 1 oder 2,
**dadurch gekennzeichnet, dass**
ein gewünschtes Flugverhalten des Fluggeräts (100, 101, 102, 103) durch einen Piloten oder per Fernsteuerung mittels einer Vorgabeeinrichtung (6), vorzugsweise nach Art eines Steuerknüppels oder Joysticks, vorgebbar ist und dass durch die Signalverarbeitungseinheit (8b, 8ba-bn) die Lageregelung unter zusätzlicher Berücksichtigung von elektrischen, vorzugsweise digitalen Vorgabedaten der Vorgabeeinrichtung vornehmbar ist

4. Fluggerät (100, 101, 102, 103) nach Anspruch 1 bis 3,
**dadurch gekennzeichnet, dass**
wenigstens eine Anzahl der Elektromotoren (3, 3a-m) als bürstenlose Gleichstrommotoren ausgebildet sind.

5. Fluggerät (100, 101, 102, 103) nach mindestens einem der Ansprüche 1 bis 4,
**dadurch gekennzeichnet, dass**
die Wirkverbindung zwischen Elektromotor (3, 3a-m) und Propeller (2, 2a-f) getriebelos nach Art eines Direktantriebs ausgebildet ist.

6. Fluggerät (100, 101, 102, 103) nach mindestens einem der Ansprüche 1 bis 5,
**dadurch gekennzeichnet, dass**
zumindest die Elektromotoren (3, 3a-m) und Propeller (2, 2a-f) sowie ggf. weitere Bestandteile (4, 5, 6, 7, 8, 9, 10, 12) des Fluggeräts an einer Rahmen-Tragstruktur (1) angeordnet sind, wobei der Rahmen aus einem Raumtragwerk mit vorzugsweise zug- und druckfesten Streben (1a), die über Knotenpunkte (1b) miteinander verbunden sind, gebildet ist, bei welchem Raumtragwerk die Krafteinleitung, insbesondere der durch die Elektromotoren (3, 3a-m) und die Propeller (2, 2a-f) verursachten Kräfte, in den Knotenpunkten (1b) erfolgt.

7. Fluggerät (100, 101, 102, 103) nach zumindest Anspruch 6,
**dadurch gekennzeichnet, dass**
die Propeller (2, 2a-f) möglichst weit von den Streben (1a) beabstandet sind und/oder
dass die Streben (1a) zumindest im Bereich der Propeller (2, 2a-f) aerodynamisch günstig ausgebildet sind, vorzugsweise im Querschnitt etwa tropfenförmig, um dem Propeller-Luftstrom möglichst wenig Strömungswiderstand entgegenzubringen.

8. Fluggerät (100, 101, 102, 103) nach mindestens einem der Ansprüche 1 bis 7,
**dadurch gekennzeichnet, dass**
die Propeller (2, 2a-f) im Wesentlichen starr und ohne Blattverstellung ausgebildet sind, wobei vorzugsweise die Wurzeln (22) der Rotorblätter (21) der Propeller eine definierte Flexibilität zum Ausgleich von Schlag- und Schwenkbewegungen besitzen, oder dass die Rotorblätter (21) steif und hinreichend robust ausgebildet sind, um Schlag- und Schwenkkräfte aufzufangen.

9. Fluggerät (100, 101, 102, 103) nach mindestens einem der Ansprüche 1 bis 8,
**dadurch gekennzeichnet, dass**
die Anzahl der Elektromotoren (3, 3a-m) und Propeller (2, 2a-f) 18 beträgt, wobei vorzugsweise die Propeller (2, 2a-f) im Wesentlichen in einer Ebene angeordnet sind, welche Ebene durch die von den Propellern überstrichenen Rotorkreisflächen definiert ist.

10. Fluggerät (100, 101, 102, 103) nach mindestens einem der Ansprüche 1 bis 9,
**dadurch gekennzeichnet, dass**
wenigstens ein Teil der Propeller (2, 2a-f) gegenüber einer Ebene geneigt angeordnet ist, vorzugsweise mit einem gemeinsamen Neigungswinkel ($\beta$), welche Ebene durch die von den restlichen Propellern (2) überstrichenen Rotorkreisflächen definiert ist.

11. Fluggerät (100, 101, 102, 103) nach mindestens einem der Ansprüche 1 bis 10,
    **dadurch gekennzeichnet, dass**
    die von den Propellern (2, 2a-f) überstrichenen Rotorkreisflächen einander nicht überlappen.

12. Fluggerät (100, 101, 102, 103) nach mindestens einem der Ansprüche 1 bis 11,
    **dadurch gekennzeichnet, dass**
    die von den Propellern (2, 2a-f) überstrichenen Rotorkreisflächen wenigstens für einen Teil der Propeller einander zumindest teilweise überlappen.

13. Fluggerät (100, 101, 102, 103) nach mindestens einem der Ansprüche 1 bis 12,
    **gekennzeichnet durch**
    eine redundante Ausführung von Lagesensor (8aa-an), Signalverarbeitungseinheit (8ba-bn), Drehzahlsteller (8da-dm) und/oder Elektromotoren (3a-m).

14. Fluggerät (100, 101, 102, 103) nach mindestens einem der Ansprüche 1 bis 13,
    **gekennzeichnet durch**
    wenigstens einen Rettungsfallschirm (7) für das gesamte Fluggerät einschließlich Pilot und/oder Nutzlast, welcher Rettungsfallschirm (7) in einem propellerfreien Bereich unterhalb oder etwa auf Höhe der vorhandenen Propeller (2, 2a-f) angeordnet ist.

15. Fluggerät (100, 102, 103) nach mindestens einem der Ansprüche 1 bis 14, **dadurch gekennzeichnet, dass**
    das Fluggerät, insbesondere die Rahmenstruktur (1) gemäß Anspruch 6, zum Transport in mehrere Teile (1') zerlegbar ist, vorzugsweise in mehrere Auslegermodule mit höchst vorzugsweise jeweils mehreren, beispielsweise drei, Elektromotoren (3) und Propellern (2), welche Elektromotoren und Propeller vorzugsweise in einer Dreieck-Konfiguration angeordnet sind, und/oder über einen Steck-/Faltmechanismus verfügt.

16. Fluggerät (100, 101, 102, 103) nach mindestens einem der Ansprüche 1 bis 15,
    **dadurch gekennzeichnet, dass**
    zum Drehmomentausgleich jeweils gleich viele linkslaufende (L) wie rechtslaufende (R) Propeller (2) vorgesehen sind.

17. Fluggerät (100, 101, 102, 103) nach mindestens einem der Ansprüche 1 bis 16,
    **gekennzeichnet durch**
    eine Pilotenkanzel (10) oder einen Sitz (4) für wenigstens einen Piloten, welche Pilotenkanzel oder welcher Sitz vorzugsweise unter einer Ebene der Propeller (2, 2a-f) angeordnet ist, höchst vorzugsweise etwa zentral.

18. Fluggerät (100, 101, 102, 103) nach zumindest Anspruch 17,
    **dadurch gekennzeichnet, dass**
    die Pilotenkanzel (10) oder der Sitz (4) um die Nickachse schwenkbar (12) aufgehängt ist, vorzugsweise an der Rahmenstruktur (1) gemäß Anspruch 6, höchst vorzugsweise trennbar, um sich insbesondere autonom auf dem Wasser fortzubewegen.

19. Fluggerät (100, 101, 102, 103) nach mindestens einem der Ansprüche 1 bis 18,
    **gekennzeichnet durch**
    ein Landegestell mit elastischen, vorzugsweise luftgefüllten Elementen (9), Rädern, Kufen (9') und/oder dergleichen, welches Landegestell höchst vorzugsweise an der Pilotenkanzel (10) oder dem Sitz (4) gemäß Anspruch 17 angeordnet ist.

20. Fluggerät (100, 101, 102, 103) nach mindestens einem der Ansprüche 1 bis 19,
    **dadurch gekennzeichnet, dass**
    zur Versorgung der Elektromotoren (3, 3a-m) wenigstens ein Energiewandler (5') zum Bereitstellen elektrischer Energie vorgesehen ist, vorzugsweise ein Verbrennungsmotor mit Generator, eine Brennstoffzellenanordnung oder dergleichen, wobei höchst vorzugsweise zum Zwischenspeichern der bereitgestellten elektrischen Energie wenigstens ein Energiespeicher (5, 5a-m) vorgesehen ist, insbesondere Akkumulator, Superkondensator oder dergleichen, mit welchem Energiespeicher die Elektromotoren (3, 3a-m) in elektrischer Wirkverbindung stehen.

**21.** Fluggerät (100, 101, 102, 103) nach zumindest Anspruch 20,
**dadurch gekennzeichnet, dass**
der Energiespeicher (5) etwa zentral angeordnet ist zur Versorgung einer Mehrzahl von Elektromotoren (3a-m).

**22.** Fluggerät (100, 101, 102, 103) nach zumindest Anspruch 21,
**dadurch gekennzeichnet, dass**
mehrere Energiespeicher (5a-m) dezentral angeordnet sind zur Versorgung jeweils einer Untergruppe von Elektromotoren (3a-m), wobei vorzugsweise jeder Elektromotor seinen eigenen Energiespeicher aufweist.

**23.** Fluggerät (101, 102, 103) nach mindestens einem der Ansprüche 1 bis 22, **gekennzeichnet durch**
wenigstens eine Zusatz-Antriebseinrichtung (13), vorzugsweise Antriebspropeller, zur Unterstützung des Vorwärtsflugs, welche Zusatz-Antriebseinrichtung höchst vorzugsweise an der Pilotenkanzel (10) oder dem Sitz (4) gemäß Anspruch 17 angeordnet ist und eine Lenkeinrichtung umfasst.

**24.** Fluggerät (100, 101, 102, 103) nach mindestens einem der Ansprüche 1 bis 23,
**dadurch gekennzeichnet, dass**
die Propeller (2, 2a-f) als freilaufende Propeller mit vorzugweise feststehender Propellerwelle ausgebildet sind.

**25.** Fluggerät (100, 101, 102, 103) nach mindestens einem der Ansprüche 1 bis 24,
**dadurch gekennzeichnet, dass**
die Mehrzahl an Propellern wenigstens einen relativ größeren Propeller und eine Anzahl relativ kleinerer Propeller umfasst, wobei vorzugsweise die kleineren Propeller um den größeren Propeller herum angeordnet sind.

**Claims**

**1.** Vertical take-off and landing aircraft (100, 101, 102, 103) for transporting passengers or loads, having a plurality of, preferably similar and redundant, electric motors (3, 3a-m) and propellers (2, 2a-f) arranged substantially in one plane, wherein each propeller is assigned its own electric motor for driving the propeller, there being provided for the attitude regulation of the aircraft (100, 101, 102, 103) at least one attitude sensor (8a, 8aa-an) in operative signalling communication with at least one signal-processing unit (8b, 8ba-bn), which signal-processing unit is constructed and configured for automatically carrying out attitude regulation, taking into account measured data of the attitude sensor, by regulating the speed of at least some of the electric motors (3, 3a-m), preferably by action of signals on speed controllers (8da-8dm) assigned to the respective electric motors, so that the aircraft, without control inputs by a pilot or by remote control, is at all times positioned with the plane defined by the propellers (2, 2a-f) substantially horizontal in space,
**characterised in that**
the electric motors (3, 3a-m) and propellers (2, 2a-f) are arranged in at least one hexagonal basic pattern and the number of electric motors (3, 3a-m) and propellers (2, 2a-f) is at least twelve in each case.

**2.** Aircraft (100, 101, 102, 103) according to claim 1,
**characterised in that**
the signal-processing unit (8b, 8ba-bn) is in the form of a microprocessor, digital signal processor, microcontroller, FPGA, digital controller, analogue processor, analogue computer, analogue controller, such as, for example, a PID controller, or in the form of a hybrid processing unit composed of analogue and digital elements.

**3.** Aircraft (100, 101, 102, 103) according to claim 1 or 2,
**characterised in that**
a desired flight characteristic of the aircraft (100, 101, 102, 103) is specifiable by a pilot or by remote control by means of an input device (6), preferably similar to a control lever or joystick, and
by means of the signal-processing unit (8b, 8ba-bn), the attitude regulation can be carried out additionally taking into account electrical, preferably digital, input data of the input device.

**4.** Aircraft (100, 101, 102, 103) according to claim 1 to 3,
**characterised in that**
at least a number of the electric motors (3, 3a-m) are in the form of brushless direct current motors.

**5.** Aircraft (100, 101, 102, 103) according to at least one of claims 1 to 4,

**characterised in that**

the operative connection between electric motor (3, 3a-m) and propeller (2, 2a-f) is gearless similar to a direct drive.

6. Aircraft (100, 101, 102, 103) according to at least one of claims 1 to 5,
   **characterised in that**
   at least the electric motors (3, 3a-m) and propellers (2, 2a-f) and optionally further components (4, 5, 6, 7, 8, 9, 10, 12) of the aircraft are arranged on a framework support structure (1), the framework being formed from a three-dimensional support structure having preferably tension-resistant and compression-resistant struts (1a) which are connected to one another via nodes (1b), in which three-dimensional support structure the introduction of force, especially of the forces caused by the electric motors (3, 3a-m) and the propellers (2, 2a-f), takes place in the nodes (1b).

7. Aircraft (100, 101, 102, 103) according to at least claim 6,
   **characterised in that**
   the propellers (2, 2a-f) are spaced as far apart as possible from the struts (1a), and/or
   the struts (1a) are of aerodynamically advantageous construction, at least in the region of the propellers (2, 2a-f), preferably being approximately droplet-shaped in cross-section, in order to offer as little as possible flow resistance to the propeller airflow.

8. Aircraft (100, 101, 102, 103) according to at least one of claims 1 to 7,
   **characterised in that**
   the propellers (2, 2a-f) are substantially rigid and without pitch control, the roots (22) of the rotor blades (21) of the propellers preferably having a defined flexibility for balancing flapping and lead/lag movements, or the rotor blades (21) are rigid and sufficiently robust to absorb flapping and lead/lag forces.

9. Aircraft (100, 101, 102, 103) according to at least one of claims 1 to 8,
   **characterised in that**
   the number of electric motors (3, 3a-m) and propellers (2, 2a-f) is 18, the propellers (2, 2a-f) preferably being arranged substantially in one plane, which plane is defined by the rotor swept areas over which the propellers sweep.

10. Aircraft (100, 101, 102, 103) according to at least one of claims 1 to 9,
    **characterised in that**
    at least some of the propellers (2, 2a-f) are inclined with respect to a plane, preferably at a common angle of inclination ($\beta$), which plane is defined by the rotor swept areas over which the remaining propellers (2) sweep.

11. Aircraft (100, 101, 102, 103) according to at least one of claims 1 to 10,
    **characterised in that**
    the rotor swept areas over which the propellers (2, 2a-f) sweep do not overlap one another.

12. Aircraft (100, 101, 102, 103) according to at least one of claims 1 to 11,
    **characterised in that**
    the rotor swept areas over which the propellers (2, 2a-f) sweep at least partly overlap one another, at least in the case of some of the propellers.

13. Aircraft (100, 101, 102, 103) according to at least one of claims 1 to 12,
    **characterised by**
    a redundant design of attitude sensor (8aa-an), signal-processing unit (8ba-bn), speed controller (8da-dm) and/or electric motors (3a-m).

14. Aircraft (100, 101, 102, 103) according to at least one of claims 1 to 13,
    **characterised by**
    at least one emergency parachute (7) for the entire aircraft, including pilot and/or payload, which emergency parachute (7) is arranged in a propeller-free region below or at approximately the level of the propellers (2, 2a-f).

15. Aircraft (100, 102, 103) according to at least one of claims 1 to 14,
    **characterised in that**
    the aircraft, especially the framework structure (1) according to claim 6, can be dismantled into several parts (1') for transport, preferably into several spar modules most preferably each with a plurality, for example three, electric motors (3) and propellers (2), which electric motors and propellers are preferably arranged in a triangular configuration, and/or has a plug-in/folding mechanism.

16. Aircraft (100, 101, 102, 103) according to at least one of claims 1 to 15,
**characterised in that**
for torque compensation, equal numbers of anticlockwise (L) and clockwise (R) propellers (2) are provided.

17. Aircraft (100, 101, 102, 103) according to at least one of claims 1 to 16,
**characterised by**
a cockpit (10) or a seat (4) for at least one pilot, which cockpit or seat is preferably arranged below a plane of the propellers (2, 2a-f), most preferably approximately centrally.

18. Aircraft (100, 101, 102, 103) according to at least claim 17,
**characterised in that**
the cockpit (10) or the seat (4) is mounted so as to be pivotable about the pitch axis (12), preferably on the framework structure (1) according to claim 6, most preferably separably, in order especially to move autonomously on the water.

19. Aircraft (100, 101, 102, 103) according to at least one of claims 1 to 18,
**characterised by**
a landing gear having resilient, preferably air-filled elements (9), wheels, skids (9') and/or the like, which landing gear is most preferably arranged on the cockpit (10) or the seat (4) according to claim 17.

20. Aircraft (100, 101, 102, 103) according to at least one of claims 1 to 19,
**characterised in that**
to supply the electric motors (3, 3a-m), at least one energy transformer (5') is provided for providing electrical power, preferably an internal combustion engine with generator, a fuel cell arrangement or the like, there most preferably being provided at least one energy storage means (5, 5a-m) for intermediate storage of the electrical power provided, especially a battery, super-capacitor or the like, with which energy storage means the electric motors (3, 3a-m) are in electrically operative connection.

21. Aircraft (100, 101, 102, 103) according to at least claim 20,
**characterised in that**
the energy storage means (5) is arranged approximately centrally for supplying a plurality of electric motors (3, 3a-m).

22. Aircraft (100, 101, 102, 103) according to at least claim 21,
**characterised in that**
a plurality of energy storage means (5a-m) are arranged decentrally for supplying a sub-group of respective electric motors (3a-m), each electric motor preferably having its own energy storage means.

23. Aircraft (101, 102, 103) according to at least one of claims 1 to 22,
**characterised by**
at least one supplementary drive device (13), preferably a drive propeller, for assisting forward flight, which supplementary drive device is most preferably arranged on the cockpit (10) or the seat (4) according to claim 17 and comprises a steering device.

24. Aircraft (100, 101, 102, 103) according to at least one of claims 1 to 23,
**characterised in that**
the propellers (2, 2a-f) are in the form of free-running propellers preferably having a fixed propeller shaft.

25. Aircraft (100, 101, 102, 103) according to at least one of claims 1 to 24,
**characterised in that**
the plurality of propellers comprises at least one relatively larger propeller and a number of relatively smaller propellers, the smaller propellers preferably being arranged around the larger propeller.

**Revendications**

1. Aéronef (100, 101, 102, 103) à décollage et atterrissage verticaux destiné au transport de personnes ou de charges, comprenant plusieurs moteurs électriques (3, 3a-m) et hélices (2, 2a-f), de préférence du même type et redondants, disposés sensiblement dans une surface, un moteur électrique propre étant associé à chaque hélice pour l'entraînement de l'hélice, au moins un détecteur d'assiette (8a, 8aa-an) en liaison fonctionnelle signalétique avec au moins une unité de traitement de signaux (8b, 8ba-bn) étant présent pour la régulation d'assiette de l'aéronef (100, 101, 102, 103), ladite unité de traitement de signaux étant configurée ou conçue pour effectuer la régulation d'assiette automatiquement en tenant compte de données de mesure du détecteur d'assiette par régulation d'au moins une partie des moteurs électriques (3, 3a-m), de préférence par intervention signalétique sur les organes de réglage de vitesse de rotation (8da-8dm) respectivement associés aux moteurs électriques, de sorte que l'aéronef se trouve à tout moment avec la surface définie par les hélices (2, 2a-f) sensiblement horizontale dans l'espace sans saisies de commande d'un pilote ou d'une commande à distance,
**caractérisé en ce que**
les moteurs électriques (3, 3a-m) et les hélices (2, 2a-f) sont disposés dans au moins un modèle de base hexagonal et le nombre de moteurs électriques (3, 3a-m) et d'hélices (2, 2a-f) est respectivement au moins de douze.

2. Aéronef (100, 101, 102, 103) selon la revendication 1,
**caractérisé en ce que**
l'unité de traitement de signaux (8b, 8ba-bn) est réalisée sous la forme d'un microprocesseur, d'un processeur de signal numérique, d'un microcontrôleur, d'un FGPS, d'un régulateur numérique, d'un processeur analogique, d'un calculateur analogique, d'un régulateur analogique, par exemple un régulateur PID, ou d'une unité de traitement hybride composée d'éléments analogiques et numériques.

3. Aéronef (100, 101, 102, 103) selon la revendication 1 ou 2,
**caractérisé en ce que**
un comportement de vol souhaité de l'aéronef (100, 101, 102, 103) peut être prédéfini par un pilote ou par commande à distance au moyen d'un dispositif de prescription (6), de préférence sous la forme d'un manche à balai ou d'un levier de commande,
et
**en ce que** la régulation de l'assiette peut être effectuée par l'unité de traitement de signaux (8b, 8ba-bn) en tenant en plus compte de données de consigne, de préférence numérique, du dispositif de prescription.

4. Aéronef (100, 101, 102, 103) selon les revendications 1 à 3,
**caractérisé en ce que**
au moins un certain nombre de moteurs électriques (3, 3a-m) sont réalisés sous la forme de moteurs à courant continu sans balais.

5. Aéronef (100, 101, 102, 103) selon au moins l'une des revendications 1 à 4,
**caractérisé en ce que**
la liaison fonctionnelle entre le moteur électrique (3, 3a-m) et l'hélice (2, 2a-f) est réalisée sans engrenage sous la forme d'un entraînement direct.

6. Aéronef (100, 101, 102, 103) selon au moins l'une des revendications 1 à 5,
**caractérisé en ce que**
au moins les moteurs électriques (3, 3a-m) et les hélices (2, 2a-f) ainsi qu'éventuellement d'autres éléments constitutifs (4, 5, 6, 7, 8, 9, 10, 12) de l'aéronef sont disposés sur une structure porteuse en cadre (1), le cadre étant formé par un ouvrage porteur en trois dimensions pourvu de jambes de force (la) de préférence résistantes à la traction et à la pression, qui sont reliées entre elles par le biais de points nodaux (1b), ouvrage porteur en trois dimensions avec lequel la transmission de force, notamment des forces provoquées par les moteurs électriques (3, 3a-m) et les hélices (2, 2a-f), s'effectue dans les points nodaux (1b).

7. Aéronef (100, 101, 102, 103) selon au moins la revendication 6,
**caractérisé en ce que**
les hélices (2, 2a-f) sont espacées le plus possible des jambes de force (la) et/ou
**en ce que** les jambes de force (la) sont de configuration aérodynamiquement favorable au moins dans la zone des hélices (2, 2a-f), de préférence approximativement en forme de goutte en section transversale, afin d'opposer le moins de résistance à l'écoulement possible au flux d'air des hélices.

8. Aéronef (100, 101, 102, 103) selon au moins l'une des revendications 1 à 7,
**caractérisé en ce que**

les hélices (2, 2a-f) sont de configuration sensiblement rigide et sans positionnement des pales, les racines (22) des pales de rotor (21) des hélices possédant de préférence une flexibilité définie afin de compenser les mouvements de battement et de pivotement, ou **en ce que** les pales de rotor (21) sont de configuration raide et suffisamment robuste pour absorber les forces de battement et de pivotement.

9. Aéronef (100, 101, 102, 103) selon au moins l'une des revendications 1 à 8,
**caractérisé en ce que**
le nombre de moteurs électriques (3, 3a-m) et d'hélices (2, 2a-f) est de 18, les hélices (2, 2a-f) étant de préférence disposées sensiblement dans un plan, ledit plan étant défini par la surface circulaire de rotor balayée par les hélices.

10. Aéronef (100, 101, 102, 103) selon au moins l'une des revendications 1 à 9,
**caractérisé en ce que**
au moins une partie des hélices (2, 2a-f) sont disposées inclinées par rapport à un plan, de préférence avec un angle d'inclinaison (β) commun, ledit plan étant défini par la surface circulaire de rotor balayée par les hélices (2) restantes.

11. Aéronef (100, 101, 102, 103) selon au moins l'une des revendications 1 à 10,
**caractérisé en ce que**
les surfaces circulaires de rotor balayées par les hélices (2, 2a-f) ne se chevauchent pas.

12. Aéronef (100, 101, 102, 103) selon au moins l'une des revendications 1 à 11,
**caractérisé en ce que**
les surfaces circulaires de rotor balayées par les hélices (2, 2a-f) se chevauchent au moins partiellement les unes les autres pour une partie des hélices.

13. Aéronef (100, 101, 102, 103) selon au moins l'une des revendications 1 à 12,
**caractérisé par**
une exécution redondante du détecteur d'assiette (8a, 8aa-an), de l'unité de traitement de signaux (8b, 8ba-bn), des organes de réglage de vitesse de rotation (8da-8dm) et/ou des moteurs électriques (3, 3a-m).

14. Aéronef (100, 101, 102, 103) selon au moins l'une des revendications 1 à 13,
**caractérisé par**
au moins un parachute de secours (7) pour la totalité de l'aéronef, y compris le pilote et/ou la charge utile, ledit parachute de secours (7) étant disposé dans une zone exempte d'hélices au-dessous des hélices (2, 2a-f) présentes ou approximativement à leur hauteur.

15. Aéronef (100, 101, 102, 103) selon au moins l'une des revendications 1 à 14,
**caractérisé en ce que**
l'aéronef, notamment la structure en cadre (1) selon la revendication 6, peut être désassemblé en plusieurs parties (1') en vue du transport, de préférence en plusieurs modules formant bras support comprenant au maximum, de préférence respectivement plusieurs, par exemple trois, moteurs électriques (3) et hélices (2), lesdits moteurs électriques et hélices étant de préférence disposés dans une configuration en triangle, et/ou disposant d'un mécanisme d'enfichage/pliage.

16. Aéronef (100, 101, 102, 103) selon au moins l'une des revendications 1 à 15,
**caractérisé en ce que**
en vue de la compensation de couple, les nombres d'hélices (2) tournant à gauche (L) et tournant à droite (R) présentes sont identiques.

17. Aéronef (100, 101, 102, 103) selon au moins l'une des revendications 1 à 16,
**caractérisé par**
un habitacle de pilote (10) ou un siège (4) pour au moins un pilote, lequel habitacle de pilote ou siège étant de préférence disposé sous un plan des hélices (2, 2a-f), hautement de préférence approximativement au centre.

18. Aéronef (100, 101, 102, 103) selon au moins la revendication 17,
**caractérisé en ce que**
l'habitacle de pilote (10) ou le siège (4) est suspendu pivotant (12) autour de l'axe de tangage, de préférence à la structure en cadre (1) selon la revendication 6, hautement de préférence de manière séparable, afin de se déplacer notamment de manière autonome sur l'eau.

**19.** Aéronef (100, 101, 102, 103) selon au moins l'une des revendications 1 à 18,
**caractérisé par**
un train d'atterrissage comprenant des éléments (9) élastiques, de préférence remplis d'air, des roues, des patins (9') et/ou similaires, ledit train d'atterrissage étant hautement de préférence disposé au niveau de l'habitacle de pilote (10) ou du siège (4) selon la revendication 17.

**20.** Aéronef (100, 101, 102, 103) selon au moins l'une des revendications 1 à 19,
**caractérisé en ce que**
au moins un convertisseur d'énergie (5') destiné à fournir de l'énergie électrique est présent pour l'alimentation des moteurs électriques (3, 3a-m), de préférence un moteur à combustion interne pourvu d'un générateur, un arrangement de piles à combustible ou similaire, au moins un accumulateur d'énergie (5, 5a-m) étant hautement de préférence présent pour l'accumulation temporaire de l'énergie électrique fournie, notamment une batterie, un supercondensateur ou similaire, accumulateur d'énergie avec lequel les moteurs électriques (3, 3a-m) se trouvent en liaison fonctionnelle électrique.

**21.** Aéronef (100, 101, 102, 103) selon au moins la revendication 20,
**caractérisé en ce que**
l'accumulateur d'énergie (5) est disposé de manière approximativement centrale en vue de l'alimentation d'une pluralité de moteurs électriques (3, 3a-m).

**22.** Aéronef (100, 101, 102, 103) selon au moins la revendication 21,
**caractérisé en ce que**
plusieurs accumulateurs d'énergie (5a-m) sont disposés de manière décentralisée pour l'alimentation respective d'un sous-ensemble de moteurs électriques (3, 3a-m), chaque moteur électrique possédant de préférence son propre accumulateur d'énergie.

**23.** Aéronef (101, 102, 103) selon au moins l'une des revendications 1 à 22,
**caractérisé par**
au moins un dispositif d'entraînement supplémentaire (13), de préférence une hélice d'entraînement, destiné à assister le vol vers l'avant, ledit dispositif d'entraînement supplémentaire étant hautement de préférence disposé au niveau de l'habitacle de pilote (10) ou du siège (4) selon la revendication 17 et comportant un dispositif de direction.

**24.** Aéronef (100, 101, 102, 103) selon au moins l'une des revendications 1 à 23,
**caractérisé en ce que**
les hélices (2, 2a-f) sont réalisées sous la forme d'hélices à rotation libre avec des arbres d'hélice de préférence fixes.

**25.** Aéronef (100, 101, 102, 103) selon au moins l'une des revendications 1 à 24,
**caractérisé en ce que**
la pluralité d'hélices comprend au moins une hélice relativement plus grande et un certain nombre d'hélices relativement plus petites, les hélices plus petites étant de préférence disposées autour de l'hélice plus grande.

**Fig. 1**

**Fig. 2**

**Fig. 3**

**Fig. 4**

**Fig. 5**

Fig. 6

Fig. 7

Fig. 8

Fig. 9

Fig. 10

# Fig. 11

**Fig. 12**

Fig. 13a

Fig. 13b

**Fig. 14**

EP 2 817 219 B1

Fig. 15a

Fig. 15b

34

Fig. 15c

Fig. 15d

10b 10a

13

13'

103d

10

11

103dd'

9'

9'

## Fig. 15e

103d

10c

103

10

103dd'

## Fig. 15f

10a

10be'    10bf'        10ba'    10b''  10b'  10bb'        10bd'

10bc'

103ca

103fa

10bc

103da

103ea                                                        13'

10be

10b  10bd        2

10

Fig. 15g

103d        103dd'

10b

103

10c

10

10b'

10a

Fig. 15h

Fig. 15i

Fig. 15j

Fig. 16

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- GB 2468787 A
- US 20060266881 A1
- WO 2008147484 A2